# EUROPEAN PATENT APPLICATION

(11) **EP 4 333 468 A1**
(43) Date of publication of application: **06.03.2024**
(21) Application number: 22831695.6
(22) Date of filing: 15.06.2022
(51) Int. Cl.: H04W 4/06, H04W 40/22

(54) **COMMUNICATION METHOD, APPARATUS AND SYSTEM**

(30) Priority: 29.06.2021 CN 202110727337
(71) Applicant: Huawei Technologies Co., Ltd., Longgang Shenzhen, Guangdong 518129 (CN)
(72) Inventor: LUO, Haiyan, Shenzhen, Guangdong 518129 (CN); PENG, Wenjie, Shenzhen, Guangdong 518129 (CN); ZENG, Qinghai, Shenzhen, Guangdong 518129 (CN)
(74) Representative: Goddar, Heinz J.
(86) International application number: PCT/CN2022/098803
(87) International publication number: WO 2023/273876

(57) **Abstract**

A communication method and apparatus, and a system are provided. The method includes: A first terminal device obtains first information, where the first information includes a first multicast and broadcast service MBS service identifier and first sidelink SL resource information, a mapping relationship exists between the first MBS service identifier and the first SL resource information, a first MBS is an MBS supported by a first relay terminal device, and the first SL resource information is used for transmitting data of the first MBS to the first terminal device. The first terminal device receives, based on the first SL resource information, the data that is of the first MBS and that is sent by the first relay terminal device. According to the method, it can be ensured that the first terminal device transmits MBS data in a scenario in which a relay terminal device supports an MBS service.

## Description

This application claims priority to Chinese Patent Application No. 202110727337.2, filed with the China National Intellectual Property Administration on June 29, 2021 and entitled "COMMUNICATION METHOD, APPARATUS, AND SYSTEM", which is incorporated herein by reference in its entirety.

### TECHNICAL FIELD

This application relates to the communication field, and more specifically, to a communication method, apparatus, and a system.

### BACKGROUND

A multicast and broadcast service (multicast and broadcast service, MBS) is a point-to-multipoint service in a specific scope. The MBS may provide a large number of users who have same requirements with multimedia services, such as live broadcast services, public security services, and batch software update services simultaneously by using fewer resources, so that network resources may be shared.

A user equipment-to-network relay (user equipment-to-network relay, U2N relay) technology is a technology that can effectively improve network coverage. Network elements used in a U2N relay scenario include a network device, a relay terminal device (relay user equipment, relay UE), and a remote terminal device (remote UE). A radio resource control (radio resource control, RRC) connection exists between the network device and the relay terminal device, and a sidelink (sidelink, SL) unicast connection exists between the relay terminal device and the remote terminal device. The remote terminal device may access the network device through the relay terminal device, to obtain a service from the network device. Downlink transmission is used as an example. Data that needs to be sent to the remote terminal device may be sent by the network device to the relay terminal device, and forwarded by the relay terminal device to the remote terminal device.

Therefore, based on the foregoing case, this application aims to resolve the following problems:
1. How does a remote UE transmit an MBS service in a scenario in which a U2N relay supports the MBS service?
2. To facilitate subsequent MBS data transmission, how does a network device separately perform MBS-related configuration for a remote UE and a U2N relay UE?

### SUMMARY

This application provides a communication method in which a relay terminal device supports a multicast and broadcast service, so that a first terminal device can transmit MBS data in a scenario in which the relay terminal device supports the MBS service.

According to a first aspect, a communication method is provided. The method includes: A first terminal device obtains first information. The first information includes a first multicast and broadcast service MBS service identifier and first sidelink SL resource information, and a mapping relationship exists between the first MBS service identifier and the first SL resource information. A first MBS is an MBS supported by a first relay terminal device, and the first SL resource information is used for transmitting data of the first MBS to the first terminal device. The first terminal device receives, based on the first SL resource information, the data that is of the first MBS and that is sent by the first relay terminal device.

According to the technical solution provided in this application, the first terminal device obtains the mapping relationship between the first MBS service identifier and the first SL resource information in a scenario in which a relay terminal device supports an MBS, so as to transmit the data of the first MBS by using the first SL resource information corresponding to the first MBS service identifier. This can ensure that the first terminal device transmits the MBS data in the scenario in which the relay terminal device supports the MBS service.

With reference to the first aspect, in some implementations of the first aspect, the first information further includes a second MBS service identifier and second SL resource information, a mapping relationship exists between the second MBS service identifier and the second SL resource information, a second MBS is an MBS supported by a second relay terminal device, and the second SL resource information is used for transmitting data of the second MBS to the first terminal device. The method includes: The first terminal device receives, based on the second SL resource information, the data that is of the second MBS and that is sent by the second relay terminal device, where the second relay terminal device is different from the first relay terminal device. According to the foregoing technical solution, it can be ensured that the first terminal device transmits the MBS data in the scenario in which the relay terminal device supports the MBS service.

With reference to the first aspect, in some implementations of the first aspect, that a first terminal device obtains first information includes:

The first terminal device receives the first information sent by the first relay terminal device or the second relay terminal device.

With reference to the first aspect, in some implementations of the first aspect, that a first terminal device obtains first information includes:

The first terminal device receives the first information sent by a network device. The first information further includes identification information of the first relay terminal device, and the identification information of the first relay terminal device corresponds to the first MBS service identifier and the first SL resource information. According to the foregoing technical solution, it can be ensured that the first terminal device transmits the MBS data in the scenario in which the relay terminal device supports the MBS service.

With reference to the first aspect, in some implementations of the first aspect, the first information further includes identification information of the second relay terminal device, and the identification information of the second relay terminal device corresponds to the second MBS service identifier and the second SL resource information.

With reference to the first aspect, in some implementations of the first aspect, the first SL resource information or the second SL resource information includes a group layer-2 identity G-L2ID and/or resource pool information RP info. According to the foregoing technical solution, it can be ensured that the first terminal device transmits the MBS data in the scenario in which the relay terminal device supports the MBS service.

With reference to the first aspect, in some implementations of the first aspect, the first terminal device sends second information, and the second information is used for requesting to send the first information.

According to a second aspect, a communication method is provided. The method includes: A first relay terminal device sends first information. The first information includes a mapping relationship between a first MBS service identifier and first sidelink SL resource information, a first MBS is an MBS supported by the first relay terminal device, and the first SL resource information is used for transmitting data of the first MBS to a first terminal device. The first relay terminal device sends, based on the first SL resource information, the data of the first MBS to the first terminal device.

According to the technical solution provided in this application, the first relay terminal device sends the mapping relationship between the first SL resource information and the first MBS service identifier corresponding to the supported first MBS. The first SL resource information is used for transmitting the data of the first MBS to the first terminal device. Therefore, it can be ensured that the first terminal device transmits MBS data in a scenario in which a relay terminal device supports an MBS service.

With reference to the second aspect, in some implementations of the second aspect, a second relay terminal device sends the first information. The first information further includes a second MBS service identifier and second SL resource information, a mapping relationship exists between the second MBS service identifier and the second SL resource information, a second MBS is an MBS supported by the second relay terminal device, and the second SL resource information is used for transmitting data of the second MBS to the first terminal device. The method includes: The second relay terminal device sends, based on the second SL resource information, the data of the second MBS to the first terminal device, where the second relay terminal device is different from the first relay terminal device. According to the foregoing technical solution, it can be ensured that the first terminal device transmits the MBS data in the scenario in which the relay terminal device supports the MBS service.

With reference to the second aspect, in some implementations of the second aspect, the first SL resource information or the second SL resource information includes a group layer-2 identity G-L2ID and/or resource pool information RP info. According to the foregoing technical solution, it can be ensured that the first terminal device transmits the MBS data in the scenario in which the relay terminal device supports the MBS service.

With reference to the second aspect, in some implementations of the second aspect, the first relay terminal device or the second relay terminal device receives second information. The second information is used for requesting to send the first information.

According to a third aspect, a communication method is provided. The method includes: A network device obtains first information. The first information includes identification information of a first relay terminal device, a first multicast and broadcast service MBS service identifier, and first sidelink SL resource information. The network device sends the first information to a first terminal device. The identification information of the first relay terminal device corresponds to the first MBS service identifier and the first SL resource information, a first MBS is an MBS supported by the first relay terminal device, and the first SL resource information is used for transmitting data of the first MBS to the first terminal device.

According to the technical solution provided in this application, the network device obtains the identification information of the first relay terminal device and a mapping relationship between the first SL resource information and the first MBS service identifier corresponding to the first MBS supported by the first relay terminal device, and sends the foregoing information to the first terminal device. The first SL resource information is used for transmitting the data of the first MBS to the first terminal device. Therefore, it can be ensured that the first terminal device transmits MBS data in a scenario in which a relay terminal device supports an MBS service.

With reference to the third aspect, in some implementations of the third aspect, the first information further includes identification information of a second relay terminal device, a second MBS service identifier, and second SL resource information. The second relay terminal device is different from the first relay terminal device, the identification information of the second relay terminal device corresponds to the second MBS service identifier and the second SL resource information, a second MBS is an MBS supported by the second relay terminal device, and the second SL resource information is used for transmitting data of the second MBS to the first terminal device. According to the foregoing technical solution, it can be ensured that the first terminal device transmits the MBS data in the scenario in which the relay terminal device supports the MBS service.

With reference to the third aspect, in some implementations of the third aspect, the first SL resource information or the second SL resource information includes a group layer-2 identity G-L2ID and/or resource pool information RP info. According to the foregoing technical solution, it can be ensured that the first terminal device transmits the MBS data in the scenario in which the relay terminal device supports the MBS service.

According to a fourth aspect, a communication method is provided. The method includes: A network device sends third information. The third information includes a first multicast and broadcast service MBS service identifier and a first sidelink SL identifier, and a mapping relationship exists between the first MBS service identifier and the first SL identifier. A first MBS is an MBS supported by a relay terminal device, and a first SL is a communication link used for transmitting the first MBS between the relay terminal device and a first terminal device.

According to the technical solution provided in this application, the network device sends the mapping relationship between the first MBS service identifier and the first SL identifier to the relay terminal device and the first terminal device, where a first MBS is an MBS supported by the relay terminal device, and a first SL is a communication link used for transmitting the first MBS between the relay terminal device and the first terminal device. Therefore, MBS-related configuration is performed for the first terminal device and the relay terminal device.

With reference to the fourth aspect, in some implementations of the fourth aspect, the first SL identifier includes at least one of the following:
a sidelink radio bearer SLRB identifier, a sidelink logical channel identifier LCID, and a group layer-2 identity G-L2ID. According to the foregoing technical solution, the network device can perform MBS-related configuration for the first terminal device and the relay terminal device.

With reference to the fourth aspect, in some implementations of the fourth aspect, the third information further includes first transmission information, a mapping relationship exists between the first transmission information and the first SL identifier, the first transmission information includes point-to-point PTP transmission information and/or point-to-multipoint PTM transmission information, and the first transmission information is used for transmitting data of the first MBS. According to the foregoing technical solution, the network device can perform MBS-related configuration for the first terminal device and the relay terminal device.

With reference to the fourth aspect, in some implementations of the fourth aspect, the third information further includes first indication information, and the first indication information indicates that a Radio Link Control Protocol RLC duplication manner is used for duplicating the data of the first MBS. Alternatively, the first indication information indicates that a Packet Data Convergence Protocol PDCP duplication manner is used for duplicating the data of the first MBS. According to the foregoing technical solution, the network device can perform MBS-related configuration for the first terminal device and the relay terminal device.

With reference to the fourth aspect, in some implementations of the fourth aspect, the third information further includes identification information of the first terminal device, and that a network device sends third information includes: The network device sends the identification information of the first terminal device to the relay terminal device. According to the foregoing technical solution, the network device can perform MBS-related configuration for the first terminal device and the relay terminal device.

According to a fifth aspect, a communication method is provided. The method includes: A relay terminal device receives third information. The third information includes a first multicast and broadcast service MBS service identifier and a first sidelink SL identifier, a mapping relationship exists between the first MBS service identifier and the first SL identifier, a first MBS is an MBS supported by the relay terminal device, and a first SL is a communication link used for transmitting the first MBS between the relay terminal device and a first terminal device.

According to the technical solution provided in this application, the relay terminal device receives the mapping relationship that is between the first MBS service identifier and the first SL identifier and that is sent by a network device. A first MBS is an MBS supported by the relay terminal device, and a first SL is a communication link used for transmitting the first MBS between the relay terminal device and the first terminal device. Therefore, the network device performs MBS-related configuration for the relay terminal device based on the foregoing mapping relationship.

With reference to the fifth aspect, in some implementations of the fifth aspect, the first SL identifier includes at least one of the following:
a sidelink radio bearer SLRB identifier, a sidelink logical channel identifier LCID, and a group layer-2 identity G-L2ID. According to the foregoing technical solution, the network device can perform MBS-related configuration for the relay terminal device based on the foregoing mapping relationship.

With reference to the fifth aspect, in some implementations of the fifth aspect, the third information further includes first transmission information, a mapping relationship exists between the first transmission information and the first SL identifier, the first transmission information includes point-to-point PTP transmission information and/or point-to-multipoint PTM transmission information, and the first transmission information is used for transmitting data of the first MBS. According to the foregoing technical solution, the network device can perform MBS-related configuration for the relay terminal device based on the foregoing mapping relationship.

With reference to the fifth aspect, in some implementations of the fifth aspect, the third information further includes first indication information, and the first indication information indicates that a Radio Link Control Protocol RLC duplication manner is used for duplicating the data of the first MBS. Alternatively, the first indication information indicates that a Packet Data Convergence Protocol PDCP duplication manner is used for duplicating the data of the first MBS. According to the foregoing technical solution, the network device can perform MBS-related configuration for the relay terminal device based on the foregoing mapping relationship.

With reference to the fifth aspect, in some implementations of the fifth aspect, the third information further includes identification information of the first terminal device, and that a relay terminal device receives third information includes: The relay terminal device receives the identification information that is of the first terminal device and that is sent by the network device. According to the foregoing technical solution, the network device can perform MBS-related configuration for the relay terminal device based on the foregoing mapping relationship.

According to a sixth aspect, a communication method is provided. The method includes: A first terminal device receives third information. The third information includes a first multicast and broadcast service MBS service identifier and a first sidelink SL identifier, and a mapping relationship exists between the first MBS service identifier and the first SL identifier. A first MBS is an MBS supported by a relay terminal device, and a first SL is a communication link used for transmitting the first MBS between the relay terminal device and the first terminal device.

According to the technical solution provided in this application, the first terminal device receives the mapping relationship that is between the first MBS service identifier and the first SL identifier and that is sent by a network device. A first MBS is an MBS supported by the relay terminal device, and a first SL is a communication link used for transmitting the first MBS between the relay terminal device and the first terminal device. Therefore, the network device performs MBS-related configuration for the first terminal device based on the mapping relationship.

With reference to the sixth aspect, in some implementations of the sixth aspect, the first SL identifier includes at least one of the following:
a sidelink radio bearer SLRB identifier, a sidelink logical channel identifier LCID, and a group layer-2 identity G-L2ID. According to the foregoing technical solution, the network device can perform MBS-related configuration for the first terminal device based on the foregoing mapping relationship.

With reference to the sixth aspect, in some implementations of the sixth aspect, the third information further includes first transmission information, a mapping relationship exists between the first transmission information and the first SL identifier, the first transmission information includes point-to-point PTP transmission information and/or point-to-multipoint PTM transmission information, and the first transmission information is used for transmitting data of the first MBS. According to the foregoing technical solution, the network device can perform MBS-related configuration for the first terminal device based on the foregoing mapping relationship.

With reference to the sixth aspect, in some implementations of the sixth aspect, the third information further includes first indication information, and the first indication information indicates that a Radio Link Control Protocol RLC duplication manner is used for duplicating the data of the first MBS. Alternatively, the first indication information indicates that a Packet Data Convergence Protocol PDCP duplication manner is used for duplicating the data of the first MBS. According to the foregoing technical solution, the network device can perform MBS-related configuration for the first terminal device based on the foregoing mapping relationship.

According to a seventh aspect, a communication apparatus is provided. The apparatus includes: an obtaining module, configured to obtain first information, where the first information includes a first multicast and broadcast service MBS service identifier and first sidelink SL resource information, a mapping relationship exists between the first MBS service identifier and the first SL resource information, a first MBS is an MBS supported by a first relay terminal device, and the first SL resource information is used for transmitting data of the first MBS to a first terminal device; and a receiving module, configured to receive, based on the first SL resource information, the data that is of the first MBS and that is sent by the first relay terminal device.

With reference to the seventh aspect, in some implementations of the seventh aspect, the first information further includes a second MBS service identifier and second SL resource information, a mapping relationship exists between the second MBS service identifier and the second SL resource information, a second MBS is an MBS supported by a second relay terminal device, and the second SL resource information is used for transmitting data of the second MBS to the first terminal device. The communication apparatus includes: The receiving module receives, based on the second SL resource information, the data that is of the second MBS and that is sent by the second relay terminal device.

With reference to the seventh aspect, in some implementations of the seventh aspect, the obtaining module is specifically configured to receive the first information sent by the first relay terminal device or the second relay terminal device.

With reference to the seventh aspect, in some implementations of the seventh aspect, the obtaining module is specifically configured to receive the first information sent by a network device. The first information further includes identification information of the first relay terminal device, and the identification information of the first relay terminal device corresponds to the first MBS service identifier and the first SL resource information.

With reference to the seventh aspect, in some implementations of the seventh aspect, the first information further includes identification information of the second relay terminal device, and the identification information of the second relay terminal device corresponds to the second MBS service identifier and the second SL resource information.

With reference to the seventh aspect, in some implementations of the seventh aspect, the first SL resource information or the second SL resource information includes a group layer-2 identity G-L2ID and/or resource pool information RP info.

With reference to the seventh aspect, in some implementations of the seventh aspect, the apparatus further includes a sending module, configured to send second information, where the second information is used for requesting to send the first information.

According to an eighth aspect, a communication apparatus is provided. The apparatus includes a sending module, configured to send first information. The first information includes a mapping relationship between a first MBS service identifier and first sidelink SL resource information, a first MBS is an MBS supported by a first relay terminal device, and the first SL resource information is used for transmitting data of the first MBS to a first terminal device. The sending module is further configured to send the data of the first MBS to the first terminal device based on the first SL resource information.

With reference to the eighth aspect, in some implementations of the eighth aspect, the communication apparatus further includes: The sending module is configured to send the first information. The first information further includes a second MBS service identifier and second SL resource information, a mapping relationship exists between the second MBS service identifier and the second SL resource information, a second MBS is an MBS supported by a second relay terminal device, and the second SL resource information is used for transmitting data of the second MBS to the first terminal device. The communication apparatus includes: The sending module is configured to send the data of the second MBS to the first terminal device based on the second SL resource information.

With reference to the eighth aspect, in some implementations of the eighth aspect, the first SL resource information or the second SL resource information includes a group layer-2 identity G-L2ID and/or resource pool information RP info.

With reference to the eighth aspect, in some implementations of the eighth aspect, the communication apparatus further includes a receiving module, configured to receive second information, and the second information is used for requesting to send the first information.

According to a ninth aspect, a communication apparatus is provided. The apparatus includes: an obtaining module, configured to obtain first information, where the first information includes identification information of a first relay terminal device, a first multicast and broadcast service MBS service identifier, and first sidelink SL resource information; and a sending module, configured to send the first information to a first terminal device. The identification information of the first relay terminal device corresponds to the first MBS service identifier and the first SL resource information, a first MBS is an MBS supported by the first relay terminal device, and the first SL resource information is used for transmitting data of the first MBS to the first terminal device.

With reference to the ninth aspect, in some implementations of the ninth aspect, the first information further includes identification information of a second relay terminal device, a second MBS service identifier, and second SL resource information. The identification information of the second relay terminal device corresponds to the second MBS service identifier and the second SL resource information, a second MBS is an MBS supported by the second relay terminal device, and the second SL resource information is used for transmitting data of the second MBS to the first terminal device.

With reference to the ninth aspect, in some implementations of the ninth aspect, the first SL resource information or the second SL resource information includes a group layer-2 identity G-L2ID and/or resource pool information RP info.

According to a tenth aspect, a communication apparatus is provided. The apparatus includes a sending module, configured to send third information. The third information includes a first multicast and broadcast service MBS service identifier and a first sidelink SL identifier, a mapping relationship exists between the first MBS service identifier and the first SL identifier, a first MBS is an MBS supported by a relay terminal device, and a first SL is a communication link used for transmitting the first MBS between the relay terminal device and a first terminal device.

With reference to the tenth aspect, in some implementations of the tenth aspect, the first SL identifier includes at least one of the following:
a sidelink radio bearer SLRB identifier, a sidelink logical channel identifier LCID, and a group layer-2 identity G-L2ID.

With reference to the tenth aspect, in some implementations of the tenth aspect, the third information further includes first transmission information, a mapping relationship exists between the first transmission information and the first SL identifier, the first transmission information includes point-to-point PTP transmission information and/or point-to-multipoint PTM transmission information, and the first transmission information is used for transmitting data of the first MBS.

With reference to the tenth aspect, in some implementations of the tenth aspect, the third information further includes first indication information, and the first indication information indicates that a Radio Link Control Protocol RLC duplication manner is used for duplicating the data of the first MBS. Alternatively, the first indication information indicates that a Packet Data Convergence Protocol PDCP duplication manner is used for duplicating the data of the first MBS.

With reference to the tenth aspect, in some implementations of the tenth aspect, the third information further includes identification information of the first terminal device, and the sending module is specifically configured to send the identification information of the first terminal device to the relay terminal device.

According to an eleventh aspect, a communication apparatus is provided. The apparatus includes a receiving module, configured to receive third information. The third information includes a first multicast and broadcast service MBS service identifier and a first sidelink SL identifier, a mapping relationship exists between the first MBS service identifier and the first SL identifier, a first MBS is an MBS supported by a relay terminal device, and a first SL is a communication link used for transmitting the first MBS between the relay terminal device and a first terminal device.

With reference to the eleventh aspect, in some implementations of the eleventh aspect, the first SL identifier includes at least one of the following: a sidelink radio bearer SLRB identifier, a sidelink logical channel identifier LCID, and a group layer-2 identity G-L2ID.

With reference to the eleventh aspect, in some implementations of the eleventh aspect, the third information further includes first transmission information, a mapping relationship exists between the first transmission information and the first SL identifier, the first transmission information includes point-to-point PTP transmission information and/or point-to-multipoint PTM transmission information, and the first transmission information is used for transmitting data of the first MBS.

With reference to the eleventh aspect, in some implementations of the eleventh aspect, the third information further includes first indication information, and the first indication information indicates that a Radio Link Control Protocol RLC duplication manner is used for duplicating the data of the first MBS; or the first indication information indicates that a Packet Data Convergence Protocol PDCP duplication manner is used for duplicating the data of the first MBS.

With reference to the eleventh aspect, in some implementations of the eleventh aspect, the third information further includes identification information of the first terminal device, and the receiving module is specifically configured to receive the identification information that is of the first terminal device and that is sent by a network device.

According to a twelfth aspect, a communication apparatus is provided. The apparatus includes a receiving module, configured to receive third information. The third information includes a first multicast and broadcast service MBS service identifier and a first sidelink SL identifier, a mapping relationship exists between the first MBS service identifier and the first SL identifier, a first MBS is an MBS supported by a relay terminal device, and a first SL is a communication link used for transmitting the first MBS between the relay terminal device and a first terminal device.

With reference to the twelfth aspect, in some implementations of the twelfth aspect, the first SL identifier includes at least one of the following: a sidelink radio bearer SLRB identifier, a sidelink logical channel identifier LCID, and a group layer-2 identity G-L2ID.

With reference to the twelfth aspect, in some implementations of the twelfth aspect, the third information further includes first transmission information, a mapping relationship exists between the first transmission information and the first SL identifier, the first transmission information includes point-to-point PTP transmission information and/or point-to-multipoint PTM transmission information, and the first transmission information is used for transmitting data of the first MBS.

With reference to the twelfth aspect, in some implementations of the twelfth aspect, the third information further includes first indication information, and the first indication information indicates that a Radio Link Control Protocol RLC duplication manner is used for duplicating the data of the first MBS; or the first indication information indicates that a Packet Data Convergence Protocol PDCP duplication manner is used for duplicating the data of the first MBS.

According to a thirteenth aspect, a communication apparatus is provided. The apparatus includes: a memory, configured to store a computer program; and a processor, configured to execute the computer program stored in the memory, to enable the communication apparatus to perform the method in any possible implementation of the first aspect, or the method in any possible implementation of the second aspect, or the method in any possible implementation of the third aspect, or the method in any possible implementation of the fourth aspect, or the method in any possible implementation of the fifth aspect, or the method in any possible implementation of the sixth aspect.

According to a fourteenth aspect, a computer-readable storage medium is provided. The computer-readable storage medium stores a computer program. When the computer program is run on a computer, the computer is enabled to perform the method in any possible implementation of the first aspect, or the method in any possible implementation of the second aspect, or the method in any possible implementation of the third aspect, or the method in any possible implementation of the fourth aspect, or the method in any possible implementation of the fifth aspect, or the method in any possible implementation of the sixth aspect.

According to a fifteenth aspect, a chip system is provided. The chip system includes a processor, configured to invoke a computer program from a memory and run the computer program, so that a communication device in which the chip system is installed performs the method in any possible implementation of the second aspect, or the method in any possible implementation of the third aspect, or the method in any possible implementation of the fifth aspect, or the method in any possible implementation of the sixth aspect.

According to a sixteenth aspect, a communication system is provided. The communication system includes the communication apparatus in any possible implementation of the seventh aspect, or the communication apparatus in any possible implementation of the eighth aspect, or the communication apparatus in any possible implementation of the ninth aspect, or the communication apparatus in any possible implementation of the tenth aspect, or the communication apparatus in any possible implementation of the eleventh aspect, or the communication apparatus in any one of the possible implementations of the twelfth aspect.

### BRIEF DESCRIPTION OF DRAWINGS

FIG. 1 is a schematic diagram of a structure of a communication system to which an embodiment of this application is applicable;
FIG. 2A is a schematic diagram of a control plane protocol stack in a UE-to-network relay scenario according to an embodiment of this application;
FIG. 2B is a schematic diagram of a user plane protocol stack in a UE-to-network relay scenario according to an embodiment of this application;
FIG. 3 is a schematic diagram of communication between UEs over a PC5 interface according to an embodiment of this application;
FIG. 4 is a schematic flowchart of a communication method according to an embodiment of this application;
FIG. 5 is a schematic flowchart of a communication method according to another embodiment of this application;
FIG. 6 is a schematic flowchart of a communication method according to an embodiment of this application;
FIG. 7 is a schematic flowchart of a communication method according to another embodiment of this application;
FIG. 8 is a schematic diagram of a PDCP duplication data forwarding manner according to this application;
FIG. 9 is a schematic diagram of an RLC duplication data forwarding manner according to this application;
FIG. 10 is a schematic diagram of a non-multiplexing data forwarding manner according to this application;
FIG. 11 is a schematic block diagram of an example of a communication apparatus according to this application;
FIG. 12 is a schematic block diagram of another example of a communication apparatus according to this application;
FIG. 13 is a schematic block diagram of another example of a communication apparatus according to this application;
FIG. 14 is a schematic block diagram of another example of a communication apparatus according to this application;
FIG. 15 is a schematic block diagram of another example of a communication apparatus according to this application;
FIG. 16 is a schematic block diagram of another example of a communication apparatus according to this application; and
FIG. 17 is a schematic block diagram of an example of a communication apparatus according to this application.

### DESCRIPTION OF EMBODIMENTS

The technical solutions in this application are described below with reference to the accompanying drawings.
(1) A network device may be an access network device, for example, a radio access network (radio access network, RAN) device, and is a device that provides a wireless communication function for a terminal device. For example, the access network device includes but is not limited to a next generation base station (next generation NodeB, gNB), an evolved NodeB (evolved NodeB, eNB), a remote radio unit (remote radio unit, RRU), a baseband unit (baseband unit, BBU), a transmission and reception point (transmission and reception point, TRP), and a transmission point (transmission point, TP) of fifth generation (5th generation, 5G), a base station in a future mobile communication system, an access point in a Wi-Fi system, or the like. Alternatively, the access network device may be a radio controller, a central unit (central unit, CU), and/or a distributed unit (distributed unit, DU) in a cloud radio access network (cloud radio access network, CRAN) scenario, or the network device may be a relay station, a vehicle-mounted device, a network device in a future evolved network, or the like.

In embodiments of this application, an apparatus configured to implement a function of the network device may be the network device, or may be an apparatus, for example, a chip system that can support the network device in implementing the function. The apparatus may be installed in the network device. In embodiments of this application, the technical solutions provided in embodiments of this application are described by using an example in which the apparatus configured to implement the function of the network device is a network device.

(2) The terminal device may be referred to as a terminal for short, for example, user equipment, and is a device with a wireless transceiver function. The terminal device may be deployed on land (for example, a vehicle-mounted device, a vehicle, a high-speed train, or a bullet train), or may be deployed on a water surface (for example, a ship), or may be deployed in the air (for example, an airplane, an uncrewed aerial vehicle, a balloon, or a satellite). The terminal device may be a mobile phone, a tablet computer, a computer with a wireless transceiver function, a virtual reality terminal device, an augmented reality terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, or a wireless terminal device in a smart home. The terminal device may alternatively be a relay terminal device, for example, a mobile phone, a router, or an access device deployed by an operator and similar to a router. This is not limited in embodiments of this application.

In embodiments of this application, an apparatus configured to implement a function of the terminal may be the terminal device, or may be an apparatus, for example, a chip system, that can support the terminal device in implementing the function. The apparatus may be installed in the terminal device. In embodiments of this application, the chip system may include a chip, or may include a chip and another discrete device. In embodiments of this application, the technical solutions provided in embodiments of this application are described by using an example in which the apparatus configured to implement the function of the terminal device is a terminal device.

(3) In embodiments of this application, "a plurality of' means two or more. In view of this, in embodiments of this application, "a plurality of" may also be understood as "at least two". "At least one" may be understood as one or more, for example, one, two, or more. For example, including at least one means including one, two, or more, and there is no limitation on which is included. For example, including at least one of A, B, and C may mean including A, B, or C, including A and B, A and C, or B and C, or including A, B, and C. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

Unless otherwise stated, ordinal numbers such as "first", "second", and "third" mentioned in embodiments of this application are used for distinguishing between a plurality of objects, and are not intended to limit a sequence, a time sequence, priorities, or importance of the plurality of objects.

In addition, the term "for example" in embodiments of this application represents giving an example, an illustration, or description. Any embodiment or design solution described as "for example" in embodiments of this application should not be explained as being more preferred or having more advantages than another embodiment or design solution. Specifically, the term "for example" is intended to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding embodiments of this application, the following describes a communication system to which embodiments of this application are applicable.

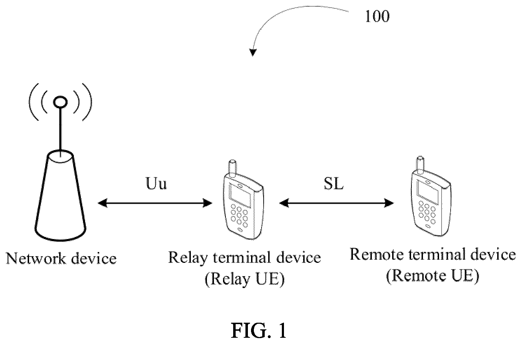

In embodiments of this application, a UE-to-network relay scenario is used as an example for description. FIG. 1 is a schematic diagram of a communication system to which an embodiment of this application is applicable. As shown in FIG. 1, a communication system 100 includes a network device, at least one relay terminal device, and one remote terminal device. The communication system 100 may include one or more relay terminal devices, and one relay terminal device is used as an example in FIG. 1. Similarly, the communication system 100 may include one or more remote terminal devices, and one remote terminal device is used as an example in FIG. 1. A radio resource control (radio resource control, RRC) connection exists between the network device and the relay terminal device, and the network device and the relay terminal device may communicate with each other over a Uu interface. A sidelink (sidelink, SL) connection exists between the relay terminal device and the remote terminal device, and the relay terminal device and the remote terminal device may communicate with each other over a PC5 interface. The remote terminal device may access a network through the relay terminal device, to set up an end-to-end RRC connection and a user plane channel to the network device, so as to obtain a service from the network. Downlink transmission is used as an example. Data that needs to be sent to the remote terminal device may be sent by the network device to the relay terminal device, and forwarded by the relay terminal device to the remote terminal device.

From a perspective of a user plane protocol stack, a relay process may be implemented by using two protocol architectures: a layer 3 (layer 3, L3) relay architecture and a layer 2 architecture (layer 2, L2) relay. The following describes embodiments of this application by using an L2 relay architecture as an example.

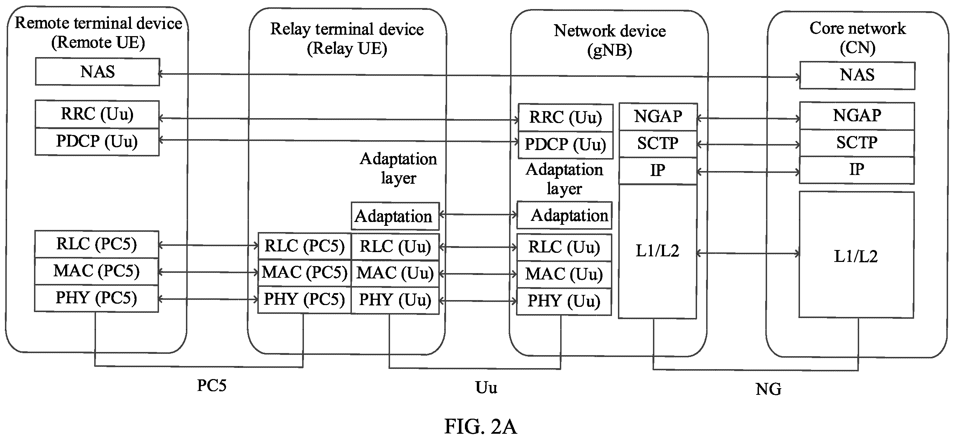

FIG. 2A shows a control plane protocol stack between the remote terminal device and the network device in the L2 relay architecture. FIG. 2A uses a new radio (new radio, NR) protocol stack as an example for illustration.

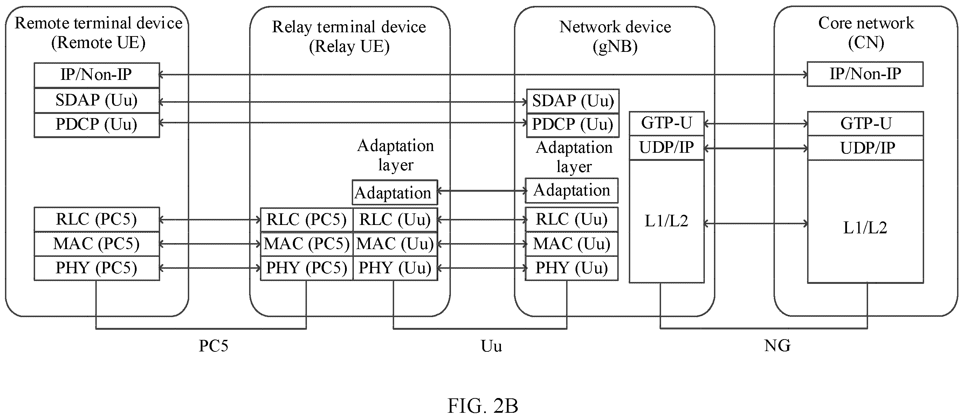

In the L2 relay architecture, data of a user may be relayed below a Packet Data Convergence Protocol (packet data convergence protocol, PDCP) layer. In this case, a schematic diagram of the user plane protocol stack is shown in FIG. 2B. FIG. 2B shows an L2 architecture designed based on an NR system. The user plane protocol stack includes a Service Data Adaptation Protocol (service data adaptation protocol, SDAP) protocol layer, and the SDAP layer is located above the PDCP layer and below an IP layer.

The following describes some related technical features in embodiments of this application.

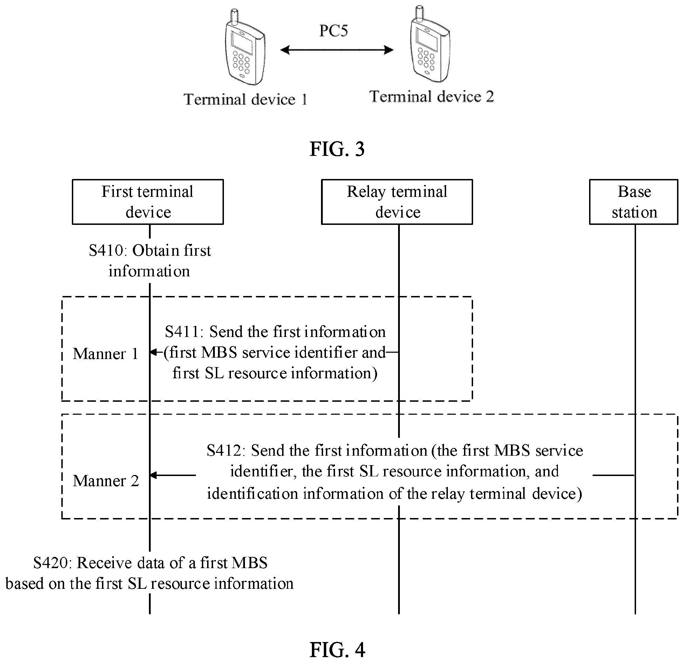

In a wireless communication system, a terminal device 1 and a terminal device 2 may perform data communication through a network, or may directly perform communication without using a network device. An interface between the terminal device 1 and the terminal device 2 is referred to as a PC5 interface, and communication between the terminal device 1 (or the terminal device 2) and the network device may be performed over a Uu interface. FIG. 3 shows the PC5 interface. A link between the terminal device 1 and the terminal device 2 is referred to as an SL, and a typical application scenario of sidelink communication is a vehicle-to-everything (vehicle-to-everything, V2X) system. In the V2X system, each vehicle may be considered as a terminal device, and data may be directly transmitted between terminal devices by using a sidelink without through a network device. Therefore, a communication delay may be significantly reduced.

In sidelink communication, broadcast communication, unicast communication, or multicast communication is supported. Broadcast communication in sidelink communication is similar to that the network device broadcasts system information to the terminal device. To be specific, the terminal device at a transmitting end does not encrypt service data and directly broadcasts the service data. Any other terminal device within a valid receiving scope may receive the service data if the terminal device is interested in the service data. Unicast communication in sidelink communication is similar to data communication performed after an RRC connection is set up between the terminal device and the network device. To be specific, a unicast connection needs to be first set up between two terminal devices. After the unicast connection is set up, the two terminal devices may perform data communication based on a negotiated communication identifier. In a communication process, transmitted data may be encrypted or may not be encrypted. Compared with broadcast communication, in unicast communication, communication can be performed only between two terminal devices that have set up a unicast connection. Multicast communication in sidelink communication means that a terminal device in a communication group sends multicast service data, and all the other terminal devices in the communication group can receive the multicast service data.

It should be noted that the terminal device may directly receive multicast and broadcast service (multicast and broadcast service, MBS) data broadcast by the network device. When the terminal device is located outside coverage of the network device, or is located at a coverage edge of the network device (for example, in a UE-to-network relay scenario), the terminal device needs to set up a control plane connection and a user plane connection to the network device through the relay terminal device, to implement communication between the terminal device and the network device. In this case, the terminal device may be referred to as a remote terminal device (remote UE). A unicast manner is used for transmitting signaling, and/or data, and/or the like between the remote terminal device and the network device. To be specific, the network device exchanges an end-to-end RRC message or user plane data with the remote terminal device through relay of the relay terminal device, so as to receive and send the signaling and/or the data. During this period, the relay terminal device serves as an intermediate node between the network device and the remote terminal device and does not sense content of the signaling, and/or the data, and/or the like exchanged between the remote terminal device and the network device, and only passively forwards the signaling, and/or the data, and/or the like. The network device sends the MBS data in a broadcast or multicast manner. When the remote terminal device is located outside the coverage or at the coverage edge and no unicast connection is set up between the remote terminal device and the network device for the MBS, the relay terminal device does not actively forward the MBS data broadcast by the network device to the remote terminal device, and the remote terminal device cannot receive the MBS data broadcast by the network device.

In view of this, embodiments of this application provide a communication method and apparatus, and a system, so that the remote terminal device may receive the MBS data broadcast by the network device through the relay terminal device. In this way, a problem of how a remote UE transmits an MBS service in a scenario in which a U2N relay supports the MBS service and a problem of how a network device separately performs MBS-related configuration for a remote UE and a U2N relay UE are resolved.

FIG. 4 is a schematic flowchart of a communication method according to an embodiment of this application. The method may be applied to the communication system 100 shown in FIG. 1. In this embodiment of this application, a network device may be the network device shown in FIG. 1, and a first terminal device may be the remote terminal device shown in FIG. 1, and a relay terminal device in this embodiment of this application may be the relay terminal device shown in FIG. 1. It should be understood that, in this embodiment of this application, a step performed by the network device may also be specifically performed by a module or a component of the network device, for example, may be performed by a chip or a chip system in the network device; and a step performed by the terminal device may also be specifically performed by a module or a component of the terminal device, for example, may be performed by a chip or a chip system in the terminal device. As shown in FIG. 4, the method may include the following steps.

S410: The first terminal device obtains first information.

It should be noted that the first information may be sent by the relay terminal device to the first terminal device, which corresponds to a manner 1. Alternatively, the first information may be sent by the network device (base station) to the first terminal device, which corresponds to a manner 2. It should be understood that a source of the first information is not limited in this embodiment of this application. The following separately describes the manner 1 and the manner 2 in detail.

Manner 1: S411: The relay terminal device sends the first information to the first terminal device, and correspondingly, the first terminal device receives the first information sent by the relay terminal device.

For example, the first information may include a first MBS service identifier and first SL resource information. The first MBS service identifier may be an identifier such as a temporary mobile group identity (temporary mobile group identity, TMGI), an MBS session identifier (MBS session identifier, MBS session ID), or a combination of the TMGI and the MBS session ID. The first SL resource information may be a group layer-2 identity (group layer-2 identifier, G-L2ID), or may be resource pool information (resource pool information, RP info). This is not limited in this embodiment of this application. The resource pool information RP info may include a start resource block of a sub-channel in a PC5 resource pool (sl-StartRB-Subchannel), a number of subchannels in the PC5 resource pool (sl-NumSubchannel), a sub-channel size of the PC5 resource pool (sl-SubchannelSize), a number of PC5 radio resource blocks (sl-RB-Number), a resource pool identifier, and the like. This is not limited in this embodiment of this application.

It should be understood that the first information may further include a plurality of MBS service identities and corresponding SL resource information, for example, a first MBS service identifier and corresponding first SL resource information, a second MBS service identifier and corresponding second SL resource information, and a third MBS service identifier and corresponding third SL resource information. This is not limited in this embodiment of this application.

Specifically, the first MBS service identifier identifies a first MBS, and the first MBS may be an MBS supported by the relay terminal device and may also be an MBS that the first terminal device is interested in. The MBS that the first terminal device is interested in may be understood as an MBS that the first terminal device expects to obtain, a target MBS of the first terminal device, an MBS supported by the first terminal device, or an MBS required by the first terminal device. It should be understood that this is not limited in this embodiment of this application.

It should be noted that a mapping relationship exists between the first MBS service identifier and the first SL resource information, and the first SL resource information is used for transmitting data of the first MBS. The mapping relationship between the first MBS service identifier and the first SL resource information may be determined by the relay terminal device. Alternatively, the mapping relationship between the first MBS service identifier and the first SL resource information may be preset. For example, the mapping relationship is preset in a manner such as protocol agreement, core network configuration, or network management configuration. The mapping relationship may be one-to-one, one-to-many, or many-to-one. It should be understood that this is not limited in this embodiment of this application.

Manner 2: S412: The network device (base station) sends the first information to the first terminal device, and correspondingly, the first terminal device receives the first information sent by the network device.

Specifically, the first information includes the first MBS service identifier and the first SL resource information. In addition, the first information includes identification information of the relay terminal device. Identification information of a first relay terminal device corresponds to the first MBS service identifier and the first SL resource information. The identification information of the relay terminal device may be an identifier (identifier, ID) of the relay terminal device, or may be other identification information for distinguishing between different relay terminal devices. It should be understood that this is not limited in this embodiment of this application.

It should be noted that the first MBS service identifier and the first SL resource information are described in step S411. Details are not described herein again in this embodiment of this application.

It should be understood that the relay terminal device is a general term, and is not limited to only one relay terminal device. To be specific, the relay terminal device may be the first relay terminal device, a second relay terminal device, or a third relay terminal device. This is not limited in this embodiment of this application.

It should be further noted that the identification information of the relay terminal device corresponds to the first MBS service identifier and the first SL resource information. In other words, identification information of one relay terminal device corresponds to one piece of first information. For example, the base station receives information 1, information 2, and information 3 that are respectively sent by a relay 1, a relay 2, and a relay 3. The information 1 includes identification information (ID 1) of the relay 1, the information 2 includes identification information (ID 2) of the relay 2, and the information 3 includes identification information (ID 3) of the relay 3, so that the base station distinguishes first information sent by different relay terminal devices.

In a possible case, the mapping relationship between the identification information of the relay terminal device and the first information is determined by the base station. For example, the information 1 includes only the identification information of the relay 1. The base station configures corresponding first information, namely, the first MBS service identifier and the corresponding first SL resource information (or the plurality of MBS service identities and the corresponding SL resource information), and the base station sends the first information to the relay 1. Operations on the relay 2 and the relay 3 are similar. In another possible case, the mapping relationship between the identification information of the relay terminal device and the first information is determined by the relay terminal device. For example, the information 1 includes the identification information of the relay 1 and the corresponding first information. The information 2 and the information 3 are similar. Alternatively, the information 1 does not include the identification information of the relay 1, but the base station may mark the information 1 based on the identification information of the relay 1 that is obtained in advance, that is, the identification information of the relay 1 corresponds to the information 1. Operations on the relay 2 and the relay 3 are similar. It should be understood that this is not limited in this embodiment of this application.

S420: The first terminal device receives the data of the first MBS based on the first SL resource information.

Because a mapping relationship exists between the first MBS identifier and the first SL resource information, and the first MBS identifier identifies the first MBS, the first terminal device finds the corresponding first SL resource information based on the first MBS service identifier, and receives the data of the first MBS based on the first SL resource information.

For example, when the first SL resource information is the group layer-2 identity G-L2ID, the first terminal device subsequently receives a data packet carrying the G-L2ID and determines that the data packet is the data of the first MBS service, that is, the first terminal device processes only the data packet carrying the G-L2ID. When the first SL resource information is the resource pool information RP info, the first terminal device subsequently receives, only in the resource pool RP, a first MBS data packet forwarded by the relay terminal device.

According to the foregoing technical solution, it can be ensured that the first terminal device supports the MBS service and transmits the MBS service in a U2N relay scenario.

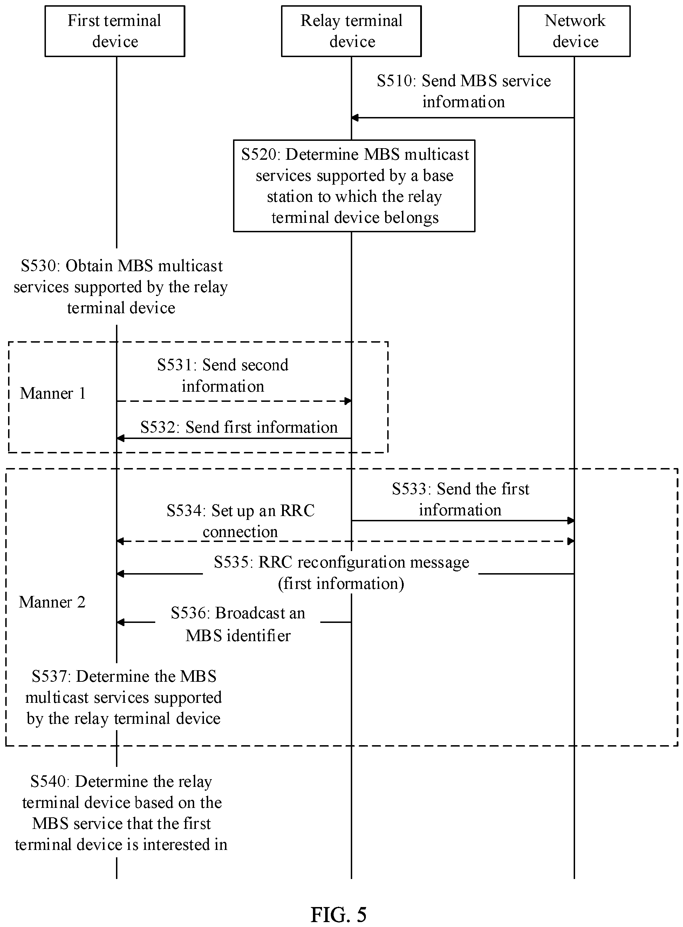

FIG. 5 shows a method for a remote UE to support an MBS in a U2N relay scenario to perform data transmission according to an embodiment of this application. The method includes the following steps.

S510: A network device (base station) sends MBS service information to a relay terminal device, and correspondingly, the relay terminal device receives the MBS service information sent by the network device.

Specifically, the network device (base station) directly broadcasts the MBS service information supported by the network device (base station). The MBS service information may be a TMGI, an MBS session ID, a combination of the TMGI and the MBS session ID, or the like. This is not limited in this embodiment of this application.

It should be understood that the relay terminal device is a general term, and is not limited to only one relay terminal device. To be specific, the relay terminal device may be a first relay terminal device, a second relay terminal device, a third relay terminal device, or the like. This is not limited in this embodiment of this application.

S520: The relay terminal device determines MBS services supported by a base station to which the relay terminal device belongs. It should be understood that the MBS service may also be referred to as an MBS multicast service, and details are not described again below.

It should be noted that currently, the relay terminal device may determine, based on the MBS service information broadcast in step S510, the MBS services supported by the base station. In this case, in addition to the TMGI and/or the MBS session ID, the MBS service information broadcast by the base station may further include multicast control channel configuration information corresponding to each MBS service, for example, a repetition period (repetition period, RP), an offset (offset), a first subframe number (first-subframe), subframe duration (subframe duration), and a modification period (modification period, MP).

It should be further understood that currently, the relay terminal device may alternatively determine, in another manner, the MBS services supported by the base station. Specifically, a core network notifies, by using a non-access stratum (non-access stratum, NAS) message, the relay terminal device of a mapping relationship between an MBS service identifier (for example, the TMGI and/or the MBS session ID) and MBS area information (MBS area info, MAI). The MBS area information may be a tracking area identifier (tracking area code, TAC), a physical cell identifier (physical cell identifier, PCI), a cell global identification (cell global identification, CGI), a gNB identifier, frequency information, or the like. It should be noted that the foregoing mapping relationship may be a mapping relationship between the TMGI/MBS session ID and the PCI/CGI, a mapping relationship between the TMGI/MBS session ID and a global RAN node ID/global gNB ID, or a mapping relationship between the TMGI/MBS session ID and NR frequency information/an NR absolute radio frequency channel number (absolute radio frequency channel number, ARFCN)/an NR frequency band. This is not limited in this embodiment of this application. After obtaining the mapping relationship between the MBS service identifier and the MBS area information, a NAS layer of the relay terminal device sends the mapping relationship to an access stratum (access stratum, AS). Then, the AS layer of a U2N relay determines, based on MBS area information MAI broadcast by a gNB and with reference to the mapping relationship that is between the MBS area information and the MBS service identifier and that is sent by the NAS layer to the AS layer, the MBS services supported by the base station. For example, the AS layer of the U2N relay directly determines, based on the tracking area identifier TAC, the cell identifier, the gNB identifier, or gNB working frequency information broadcast by the gNB and with reference to the mapping relationship obtained by the NAS layer and sent to the AS layer, the MBS services supported by the base station in which the U2N relay is located.

It should be further noted that a first terminal device learns of, in two manners, the MBS services supported by the U2N relay. The following describes the two manners with reference to specific steps.

Manner 1: The remote UE learns of, over a sidelink interface, the MBS services supported by the U2N relay.

S531: The first terminal device sends second information to the relay terminal device, and correspondingly, the relay terminal device receives the second information sent by the first terminal device.

Specifically, the second information is used for requesting the relay terminal device to send first information. It should be understood that the second information may include a first MBS service identifier (for example, the TMGI and/or the MBS session ID) that the remote UE is interested in, or the second information may not include a first MBS service identifier that the remote UE is interested in. This is not limited in this embodiment of this application.

S532: The relay terminal device sends the first information to the first terminal device, where the first information includes the first MBS service identifier and first SL resource information.

It should be noted that the first MBS service identifier and the first SL resource information are described in step S411. Details are not described herein again in this embodiment of this application.

Specifically, after receiving the second information, the relay terminal device sends the first information to the first terminal device based on the second information. Optionally, when the second information includes the first MBS service identifier that the remote UE is interested in, the U2N relay may reply in a unicast manner. In this case, the first information includes the first MBS service identifier that the remote UE is interested in and the corresponding first SL resource information (G-L2ID and RP info).

Optionally, when the second information does not include the first MBS service identifier that the remote UE is interested in, the U2N relay may choose to broadcast the first information over the sidelink interface. In this case, the first information includes all first MBS identities supported by the relay terminal device and the first SL resource information corresponding to the first MBS identities. It should be understood that the first MBS identifier herein includes but is not limited to an MBS identifier corresponding to an MBS service that the first terminal device is interested in.

It should be understood that step S531 is an optional step. In other words, the relay terminal device may directly broadcast the first information over the sidelink interface, and the first terminal device does not need to send request information to the relay terminal device.

According to the manner 1, the remote UE can learn of, over the sidelink interface, a first MBS service supported by the U2N relay, so that it can be ensured that the remote UE supports the MBS service in the U2N relay scenario, to perform service transmission.

Manner 2: The remote UE learns of, over a Uu interface, the MBS services supported by the U2N relay.

S533: The relay terminal device sends the first information to the network device, and correspondingly, the network device receives the first information sent by the relay terminal device.

The first information may include identification information of the relay terminal device, the first MBS service identifier, and the first SL resource information. It should be noted that the identification information of the relay terminal device, the first MBS service identifier, and the first SL resource information are described in step S412. Details are not described herein again in this application.

It should be understood that the relay terminal device is a general term, and is not limited to only one relay terminal device. To be specific, the relay terminal device may be the first relay terminal device (relay 1), the second relay terminal device (relay 2), the third relay terminal device (relay 3), or the like. This is not limited in this embodiment of this application. In other words, the network device obtains U2N relay identification information (ID 1, ID 2, ID 3, ...) sent by all relay terminal devices (relay 1, relay 2, relay 3, ...) within coverage of the network device, first MBS service identities supported by the relay terminal devices, and first SL resource information corresponding to the MBS service identities.

Optionally, in this application, the first information may further include an MBS identifier, and the MBS identifier may be used for replacing the TMGI and/or the MBS session ID. A reason is that using MBS identities to represent different MBS multicast services can reduce broadcast overheads of a PC5 interface. It should be understood that the MBS identifier may be determined by the U2N relay, or may be a corresponding MBS identifier determined by the gNB for each first MBS service identifier (for example, the TMGI and/or the MBS session ID) after the U2N relay sends the mapping relationship between the MBS identifier and the first MBS service identifier to the gNB. This is not limited in this embodiment of this application. S534: The first terminal device sets up an RRC connection to the network device through the relay terminal device.

Specifically, the remote UE sends an RRC setup request message to the U2N relay over the PC5 interface. After identifying that the message is an RRC message, the U2N relay forwards the RRC setup request message and identification information of the remote UE to the gNB. The gNB sends an RRC connection setup message to the remote UE through the U2N relay, and then the remote UE sends an RRC connection setup complete message to the gNB through the U2N relay. Therefore, the remote UE sets up an RRC connection to the gNB through the U2N relay.

It should be understood that step S534 may be performed before step S533, or may be performed after step S533. This is not limited in this embodiment of this application.

S535: The network device sends an RRC reconfiguration message to the first terminal device, where the RRC reconfiguration message includes the first information.

Specifically, after receiving the first information sent by the U2N relay in step S533, the gNB includes the first information in the RRC reconfiguration message sent to the remote UE. To be specific, the RRC reconfiguration message may include the first MBS service identifier and the corresponding first SL resource information. Optionally, the RRC reconfiguration message includes the identification information of the relay terminal device and the corresponding first information (namely, the first MBS service identifier and the corresponding first SL resource information). For a correspondence between the identification information of the relay terminal device identifier and the corresponding first information, reference may be made to the foregoing step S412. Details are not described herein again in this application.

It should be understood that the first information may further include an MBS identifier, that is, may include a mapping relationship between the MBS identifier and the first MBS service identifier. This is not limited in this embodiment of this application.

S536: The relay terminal device broadcasts the identification information of the relay terminal device to the first terminal device.

For example, there may be a plurality of relay terminal devices, that is, the first relay terminal device (relay 1) broadcasts identification information (ID 1) of the first relay terminal device, the second relay terminal device (relay 2) broadcasts identification information (ID 2) of the second relay terminal device, and the third relay terminal device (relay 3) broadcasts identification information (ID 3) of the third relay terminal device, and so on. A number of relay terminal devices is not limited in this embodiment of this application.

It should be noted that there is no sequence for performing step S535 and step S536. In other words, step S536 may be performed before step S535. It should be understood that this is not limited in this embodiment of this application.

S537: The first terminal device learns of, based on the identification information broadcast by the relay terminal device and the mapping relationship that is between the identifier of the relay terminal device and the first information and that is sent by the network device, the MBS service supported by the relay terminal device and the corresponding SL resource information.

For example, the plurality of relay terminal devices separately broadcast the identification information (ID 1, ID 2, and ID 3) of the plurality of relay terminal devices to the first terminal device. At the same time, the network device sends a plurality of pieces of relay terminal identification information (ID 1, ID 2, ID 3, ID 4, ID 5, and ID 6) and a plurality of pieces of first information respectively corresponding to the plurality of pieces of relay terminal identification information to the first terminal device. The first terminal device determines, based on the identification information (ID 1, ID 2, and ID 3) broadcast by the relay terminal device and the identification information of the relay terminal device and the corresponding first information that are sent by the network device, the first information respectively corresponding to the identification information (ID 1, ID 2, and ID 3), to learn of the first MBS service identifier supported by the relay terminal device and the corresponding first SL resource information.

S540: The first terminal device determines the first relay terminal device based on the first MBS service identifier that the first terminal device is interested in.

Specifically, a non-access stratum NAS of the first terminal device sends, to an access stratum AS layer, the first MBS service identifier that the first terminal device is interested in. After the first terminal device learns of, in the foregoing manner 1 or manner 2, the MBS service supported by the relay terminal device, the AS layer of the first terminal device selects, based on the first MBS service identifier that the first terminal device is interested in and that is indicated by the NAS layer, the first relay terminal device that supports the first MBS service that the first terminal device is interested in.

It should be further noted that when there are a plurality of first relay terminal devices that support the first MBS service that the remote UE is interested in, the remote UE may select a first relay terminal device whose PC5 signal strength is strongest, or randomly select one from a plurality of first relay terminal devices whose PC5 signal strength exceeds a specific threshold. It should be understood that this is not limited in this embodiment of this application.

According to the foregoing technical solution, the first terminal device can support the MBS service in the U2N relay scenario and determine the first relay terminal device based on the MBS service that the remote UE is interested in, to perform MBS data transmission. It should be understood that the first terminal device may be further determined in another manner. This is not limited in this embodiment of this application.

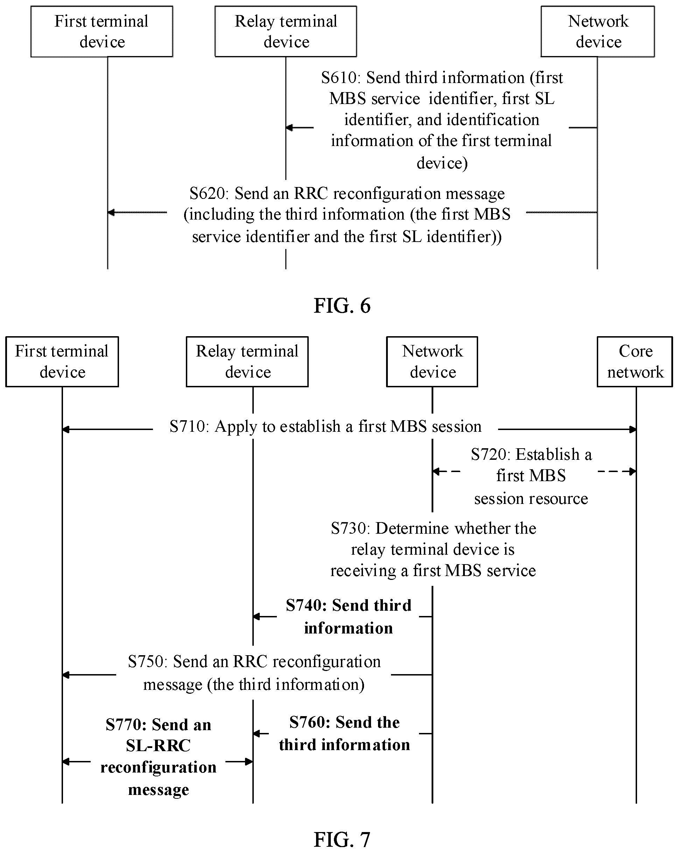

FIG. 6 is a schematic flowchart of still another communication method according to an embodiment of this application. The method includes the following steps.

S610: A network device sends third information to a relay terminal device, and correspondingly, the relay terminal device receives the third information sent by the network device.

Specifically, the third information may include identification information of a first terminal device (remote UE), a first MBS service identifier, and a corresponding first SL identifier. The first MBS service identifier may be an identifier such as a TMGI and/or an MBS session ID, and the first SL is a communication link used for transmitting the first MBS between the relay terminal device and the first terminal device. The first SL identifier may be a sidelink radio bearer (sidelink radio bearer, SLRB) identifier, a logical channel identifier (logical channel identity, LCID), or a group layer-2 identity G-L2ID. This is not limited in this embodiment of this application.

The third information may include an identifier of the first terminal device, at least one MBS service identifier, and a first SL identifier corresponding to the at least one MBS service identifier. For example, the third information may include the identifier of the first terminal device, a first MBS service identifier and a corresponding first SL identifier, and a second MBS service identifier and a corresponding second SL identifier. This is not limited in this embodiment of this application.

It should be understood that the identification information of the remote UE may be an identifier of the remote UE on a sidelink, an identifier allocated by the relay terminal device to the remote UE, or other identification information for distinguishing between different remote UEs. It should be understood that this is not limited in this embodiment of this application.

It should be noted that the first MBS service identifier identifies the first MBS, and the first MBS may be an MBS that the first terminal device is interested in. The MBS that the first terminal device is interested in may be understood as an MBS that the first terminal device expects to obtain, a target MBS of the first terminal device, an MBS supported by the first terminal device, or an MBS required by the first terminal device. It should be understood that this is not limited in this embodiment of this application.

It should be further noted that a mapping relationship exists between the first MBS service identifier and the first SL identifier, and the first SL identifier is used for transmitting data of the first MBS service. It should be understood that the mapping relationship between the first MBS service identifier and the first SL identifier may be determined by the network device. Alternatively, the mapping relationship between the first MBS service identifier and the first SL identifier may be preset. For example, the mapping relationship is preset in a manner such as protocol agreement, core network configuration, or network management configuration. The mapping relationship may be one-to-one, one-to-many, or many-to-one. This is not limited in this embodiment of this application.

S620: The network device sends an RRC reconfiguration message to the first terminal device, where the RRC reconfiguration message includes the third information, and the third information may include the first MBS service identifier and the corresponding first SL identifier. Optionally, an identifier of the corresponding relay terminal device may further be included.

It should be noted that the first MBS service identifier and the first SL identifier are described in step S610, and details are not described herein again in this application.

In a possible implementation, the third information may further include first transmission information. Specifically, the first transmission information may be a point-to-point (point to point, PTP) transmission manner, or may be a point-to-multipoint (point to multipoint, PTM) transmission manner. This is not limited in this embodiment of this application. Specifically, a mapping relationship exists between the first transmission information and the first SL identifier. In other words, a mapping relationship also exists between the first transmission information and the first MBS service identifier. It should be understood that the mapping relationship may be one-to-one mapping, one-to-many mapping, or many-to-one mapping. This is not limited in this embodiment of this application. For example, the third information includes an MBS #1, an SL identifier #1 corresponding to the PTP, and an SL identifier #2 corresponding to the PTM. Optionally, the third information further includes an MBS #2, an SL identifier #3 corresponding to the PTP, and an SL identifier #4 corresponding to the PTM.

In a possible implementation, the third information further includes first indication information, and the first indication information indicates whether to duplicate the data of the first MBS in a Radio Link Control Protocol (radio link control, RLC) duplication manner or duplicate the data of the first MBS in a Packet Data Convergence Protocol (packet data convergence protocol, PDCP) duplication manner.

The following describes in detail another embodiment provided in this application with reference to FIG. 7.

S710: A first terminal device applies to establish a first MBS session to a core network element through a relay terminal device and a network device (base station).

Specifically, a remote UE sends a non-access stratum NAS message to a fifth generation (5th generation, 5G) core network control plane network element (for example, an access and mobility management function (access and mobility management function, AMF)) through a U2N relay and a gNB, to apply for establishing the first MBS session. For example, a NAS message, for example, a protocol data unit (protocol data unit, PDU) session establishment request (PDU Session Establishment Request) message may be sent, and the PDU session establishment request message includes a first MBS session identifier (for example, a TMGI and/or MBS session info). The 5G core network returns a NAS layer response message, for example, a PDU session establishment response message, to the remote UE through the gNB and the U2N relay. According to the foregoing method, the remote UE establishes the first MBS session with the core network element.

S720: The core network establishes an MBS session resource with the base station.

In a possible implementation, if the 5G core network control plane network element (for example, the AMF) finds that the gNB currently does not broadcast a first MBS service requested by the remote UE, for example, finds that no common user plane channel corresponding to the first MBS session is established between a 5G core network user plane network element (for example, a multicast/broadcast user plane function (multicast/broadcast user plane function, MB-UPF)) and the gNB. In this case, the 5G core network control plane network element (for example, the AMF) establishes the common user plane channel of the first MBS session with the gNB by using an MBS session establishment procedure (for example, a Multicast Distribution procedure). Subsequently, the MB-UPF sends an MBS data packet of the first MBS session to the gNB through the common user plane channel. As described above, a user plane channel of an MBS service level is mainly established. The following describes UE-level MBS multicast service information.

In a possible implementation, the 5G core network control plane network element (for example, the AMF) sends a PDU session resource setup request (PDU Session Resource Setup Request) or a PDU session resource modification request (PDU Session Resource Modification Request) for the UE to the gNB. It should be understood that the foregoing session request includes a remote UE identifier (for example, an AMF UE NGAP ID), a first MBS service identifier, a QoS parameter of the first MBS service, and the like. This is not limited in this embodiment of this application.

It should be understood that the quality of service (quality of service, QoS) parameter of the first MBS service may include an MBS QoS flow identifier (QoS flow identifier, QFI) and a corresponding QoS parameter. This is not limited in this embodiment of this application.

It should be further noted that step S720 is an optional step. For example, if the AMF finds that the common user plane channel corresponding to the first MBS session is established between the 5G core network user plane network element (for example, the MB-UPF) and the gNB, this procedure does not include step S720.

S730: The network device determines whether the relay terminal device is currently receiving the first MBS service.

Specifically, the gNB first determines, based on the remote UE identifier and the first MBS service identifier included in the PDU session resource setup or modification request sent by the core network, whether the U2N relay connected to the remote UE is receiving the first MBS service.

In a possible implementation, the U2N relay is currently receiving the first MBS service. In this case, the U2N relay duplicates a data packet of the first MBS service in a PDCP duplication or RLC duplication manner, and then forwards the data packet to the remote UE.

In another possible implementation, the U2N relay does not receive the first MBS service currently. In this case, the U2N relay assists the remote UE in receiving the first MBS service in a non-multiplexing manner, that is, the U2N relay serves as a relay.

The following describes MBS configurations of the U2N relay and the remote UE with reference to steps S740 and S750. The gNB is responsible for the MBS configuration of the U2N relay. For the MBS configuration of the remote UE, in one possible case, a channel between the U2N relay and the remote UE is configured by the gNB, and in another possible case, the channel between the U2N relay and the remote UE is configured by the U2N relay.

S740: The network device sends third information to the relay terminal device, where the third information includes identification information of the first terminal device, the first MBS service identifier, and a corresponding first SL identifier.

It should be noted that specific descriptions of the identification information of the first terminal device, the first MBS service identifier, and the corresponding first SL identifier are described in step S610. Details are not described herein again in this application. It should be understood that the identification information of the remote UE may be a remote UE identifier carried in a first RRC message that the U2N relay forwards for the remote UE, or may be other identification information. This is not limited in this embodiment of this application.

In a possible implementation, the first MBS service identifier may alternatively be a multicast radio bearer (multicast radio bearer, MRB) identifier. In this case, the remote UE may learn the first MBS that the remote UE is interested in based on the MRB ID.

In a possible implementation, the third information may further include first indication information, and the first indication information may be a PDCP duplication indication, or may be an RLC duplication indication. This is not limited in this embodiment of this application. It should be understood that the third information may not include the first indication information, that is, a protocol specifies whether PDCP duplication or RLC duplication is performed. In this case, indication by using the first indication information is not required.

For example, an RRC reconfiguration message may include the following information elements:
> remote UE ID (identification information of the first terminal device)
> TMGI/MBS session info/MRB ID (MBS service identifier)
> RLC/PDCP duplication indication (optional) (RLC/PDCP duplication indication)
> associated SL-RB ID/SL-LCID (SL-RB ID or SL LCID)
> SL RLC/MAC/PHY config (sidelink RLC/MAC/PHY layer configuration)

In a possible implementation, the third information may further include first transmission information, the first transmission information may be a PTP transmission manner, or may be a PTM transmission manner, and a mapping relationship exists between the first transmission information and the first MBS service identifier and the first SL identifier.

Specifically, considering that there may be two MBS data transmission manners, namely, the PTP and/or the PTM, between the gNB and the U2N relay, the RRC reconfiguration message may include first SL identities corresponding to the PTP transmission manner and/or the PTM transmission manner, respectively.

For example, the RRC reconfiguration message may include the following information elements:
> remote UE ID
> TMGI/MBS session info
> PTP associated SL-RB ID/SL-LCID (SL-RB ID or SL LCID corresponding to the PTP)
> PTM associated SL-RB ID/SL-LCID/G-L2ID (SL-RB ID, SL LCID, or G-L2ID corresponding to the PTM)
> SL RLC/MAC/PHY config (sidelink low-layer configuration information)

It should be noted that the SL RLC/MAC/PHY config is the RLC/MAC/PHY layer configuration that is configured by the gNB for the U2N relay, that is used for transmission between the U2N relay and the remote UE, and that is of a sidelink/PC5 interface. The SL RLC configuration corresponds to the SL-RB/SL-LCID, and the SL MAC/PHY configuration may be shared by a plurality of SL-RBs/SL-LCIDs.

In another possible implementation, when the relay terminal device currently does not receive an MBS service, the RRC reconfiguration message further includes a data radio bearer (data radio bearer, DRB) ID of the relay terminal device. For example, the RRC reconfiguration message includes the following information elements:
> remote UE ID
> TMGI/MBS session info
> associated DRB ID (gNB <-> U2N relay)
> associated SL-RB ID/SL-LCID/G-L2ID (U2N relay <-> remote UE)
> SL RLC/MAC/PHY config

In addition, considering that there may be two MBS data transmission manners, namely, the PTP and the PTM, between the gNB and the U2N relay, the RRC reconfiguration message may include the first SL identities of the PTP and the PTM, respectively. For example, the RRC reconfiguration message includes the following information elements:
> remote UE ID
> TMGI/MBS session info
> PTP associated DRB ID (gNB <-> U2N relay)
> PTP associated SL-RB ID/SL-LCID (U2N relay <-> remote UE)
> PTM associated SL-RB ID/SL-LCID/G-L2ID (U2N relay <-> remote UE)
> SL RLC/MAC/PHY config

It should be noted that step S740 describes MBS configuration information specifically configured by the network device for the relay terminal device. The following describes MBS configuration information specifically configured by the network device for the first terminal device with reference to step S750.

S750: The network device sends an RRC reconfiguration message to the first terminal device, where the RRC reconfiguration message includes the third information, and the third information may include the first MBS service identifier and the corresponding first SL identifier. Optionally, an identifier of the relay terminal device may further be included.

It should be noted that specific descriptions of the first MBS service identifier and the corresponding first SL identifier are described in step S620. Details are not described herein again in this application.

In a possible implementation, the RRC reconfiguration message may further include an MRB identifier and a high-layer configuration of a Uu interface (for example, an SDAP configuration and a PDCP configuration of the Uu interface), and the remote UE can learn the first MBS that the remote UE is interested in based on the MRB ID. For example, the RRC reconfiguration message may include the following information elements:
> TMGI/MBS session info
> MRB ID (optional)
> Uu SDAP config
> Uu PDCP config
> SL-RB ID/SL-LCID
> SL RLC/MAC/PHY config

In a possible implementation, the third information may further include first transmission information, the first transmission information may be the PTP or the PTM, and the first transmission information corresponds to the first MBS service identifier and the first SL identifier. Specifically, considering that there may be two MBS data transmission manners, namely, the PTP and the PTM, between the gNB and the U2N relay, the RRC reconfiguration message may include the first SL identities corresponding to the PTP transmission manner and the PTM transmission manner, respectively. For example, the RRC reconfiguration message may include the following information elements:
> TMGI/MBS session info
> MRB ID (optional)
> Uu SDAP config
> Uu PDCP config
> PTP associated SL-RB ID/SL-LCID
> PTM associated SL-RB ID/SL-LCID/G-L2ID
> SL RLC/MAC/PHY config

It should be noted that the SL RLC/MAC/PHY config is the RLC/MAC/PHY layer configuration that is configured by the gNB for the U2N relay, that is used for transmission between the U2N relay and the remote UE, and that is of a sidelink/PC5 interface. The SL RLC configuration corresponds to the SL-RB/SL-LCID, and the SL MAC/PHY configuration may be shared by a plurality of SL-RBs/SL-LCIDs.

It should be noted that S760 and S770 mainly describe MBS configuration information specifically configured by the U2N relay for the remote UE. A case in which the gNB configures the MBS for the U2N relay in step S760 may be understood as reducing a configuration between the U2N relay and the remote UE based on step S740. For example, the RRC reconfiguration message includes the following information elements:
> remote UE ID
> TMGI/MBS session info/MRB ID
> RLC/PDCP duplication indication (optional)

It should be further noted that other cases in step S760 are similar. To be specific, when the gNB configures the MBS for the U2N relay in step S760, the configuration between the U2N relay and the remote UE is reduced. A specific MBS configuration method is described in step S740. Details are not described herein again in this application.

In a possible implementation, the U2N relay sends an RRC reconfiguration message of the sidelink/PC5 interface, namely, an SL-RRC reconfiguration message, to the remote UE through a signaling radio bearer (SL-SRB) of the sidelink/PC5 interface. For example, the SL-RRC reconfiguration message may include the following information elements:
> TMGI/MBS session info
> SL-RB ID/SL-LCID/G-L2ID
> Uu/SL PDCP config
> SL RLC/MAC/PHY config

To be specific, the SL-RRC reconfiguration message includes a mapping relationship between the MBS service identifier and the SL-RB, the SL-LCID, the SL G-LCID, or the like. The U2N relay sends a corresponding Uu PDCP or SL PDCP configuration to the remote UE based on a Uu PDCP or SL PDCP configuration of the U2N relay. The U2N relay further configures, for the remote UE, a PC5 low-layer configuration, for example, a PC5 RLC/MAC/PHY layer configuration used for transmission between the U2N relay and the remote UE. Optionally, the SL-RRC reconfiguration message may include the PTP associated SL-RB ID/SL-LCID/SL G-L2ID and the PTM associated SL-RB ID/SL-LCID/SL G-L2ID.

It should be understood that a specific MBS configuration method may be performed by selecting steps S740 and S750 or steps S760 and S770.

It should be noted that, after performing MBS configuration, the U2N relay sends an MBS data packet to the remote UE through a corresponding PC5 channel.

It should be understood that, for the remote UE that is in an idle/inactive state, the remote UE may notify the relay of the MBS multicast service that the remote UE is interested in through a sidelink, and the U2N relay directly performs the MBS configuration for the remote UE according to the configuration method in steps S760 and S770.

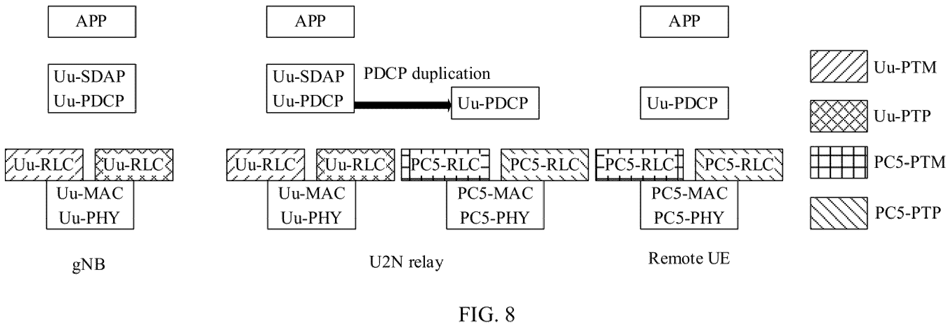

With reference to FIG. 8 to FIG. 10, the following mainly describes specific execution manners of the foregoing three solutions for transmitting MBS data: PDCP duplication, RLC duplication, and non-multiplexing manner. A solution 1 (PDCP duplication) and a solution 2 (RLC duplication) both are based on a fixed idea: When receiving an MBS service by using a PTP/PTM mechanism, a relay UE copies MBS data to a PTP/PTM link of a sidelink in the RLC or PDCP duplication manner, and finally sends the MBS data to the remote UE through the PTP/PTM link of the sidelink. However, a solution 3 is the non-multiplexing manner and is different from the solutions 1 and 2. To be specific, the solution 3 does not consider a case in which the U2N relay duplicates a received MBS data packet, sends one copy to an application layer of the U2N relay, and continues to deliver the other copy to the remote UE.

FIG. 8 mainly shows that the U2N relay duplicates the MBS data in the PDCP duplication manner and forwards the MBS data to the remote UE. Specifically, first, a PTP RLC entity and a PTM RLC entity of the U2N relay respectively receive the MBS data from a PTP channel and a PTM channel of the gNB, and then send the MBS data to an anchor Uu-PDCP entity (that is, a Uu-PDCP entity at a receiving end). Then, the Uu-PDCP entity of the U2N relay duplicates the MBS data packet, sends one copy of the MBS data packet to the application layer of the U2N relay, and sends the other copy to a Uu-PDCP (or PDCP) entity at a transmitting end.

It should be noted that, before the Uu-PDCP entity of the U2N relay duplicates the MBS data packet, the Uu-PDCP entity at the receiving end of the U2N relay performs duplicate packet detection and reordering.

In a possible implementation, when the Uu-PDCP entity at the receiving end of the U2N relay forwards the MBS data packet to the Uu-PDCP entity at the transmitting end, each packet carries a PDCP SN.

In another possible implementation, before, after, or when the Uu-PDCP entity at the receiving end of the U2N relay forwards the MBS data packet to the Uu-PDCP entity, a start PDCP SN is carried. When the Uu-PDCP entity at the transmitting end of the U2N relay receives a start PDCP SN corresponding to first MBS data (for example, a PDCP SDU), a PDCP SN corresponding to subsequently received MBS data is increased by 1.

Finally, to enable the PDCP at a receiving end of the remote UE to normally perform reordering, the relay UE needs to send the start PDCP SN to the remote UE. For example, a bearer identifier and a corresponding start PDCP SN may be sent to the remote UE through a PC5 channel.

It should be understood that the bearer identifier may be an SL-RB ID, an SL-MRB ID, or an SL-LCID, or may be a PC5-RB ID, a PC5-MRB ID, or a PC5-LCID. This is not limited in this embodiment of this application.

It should be further understood that a specific sending manner may be that the bearer identifier and the corresponding start PDCP SN are carried in sidelink control information (sidelink control information, SCI) and sent to the remote UE during PC5 unicast transmission. Alternatively, in a period of time in which the MBS data packet is sent to the remote UE through the PC5, the start PDCP SN is included in a header (for example, a MAC header, an RLC header, or a PDCP header) in which each MBS data packet is encapsulated. This is not limited in this embodiment of this application.

It should be further noted that transmission reliability may be ensured by using a hybrid automatic repeat request (hybrid automatic repeat-request, HARQ) mechanism of the PC5 interface and an RLC automatic repeat request (automatic repeat-request, ARQ) of the PTP channel between the U2N relay and the remote UE. Further, the PDCP entity on the remote UE side may further trigger a PDCP status report to a peer end, to implement transmission reliability by using the PDCP layer.

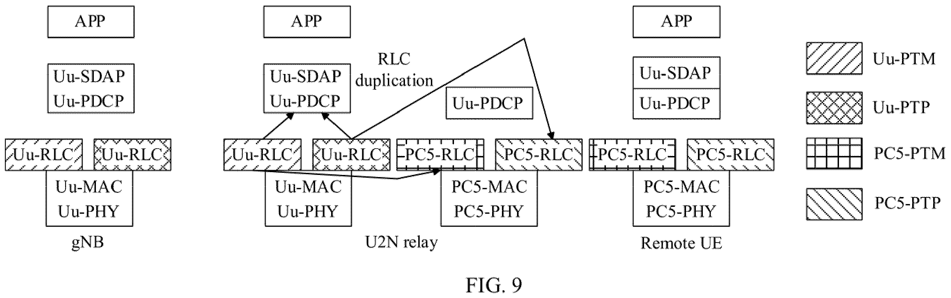

FIG. 9 mainly shows that the U2N relay duplicates the MBS data in the RLC duplication manner and forwards the MBS data to the remote UE. First, the PTP RLC entity and the PTM RLC entity of the U2N relay respectively receive the MBS data from the PTP channel and the PTM channel of the gNB. The PTP RLC entity (Uu-PTP RLC for short) and the PTM RLC entity (Uu-PTM RLC for short) separately duplicate the MBS data (for example, an RLC SDU) in the RLC duplication manner, send one copy to the Uu-PDCP entity at the receiving end, and forward the other copy to the PTP RLC entity (PC5-PTP RLC for short) and the PTM RLC entity (PC5-PTM RLC for short) connected to the PC5 at the corresponding transmitting end.

It should be noted that the Uu-PDCP entity at the receiving end further has a function of the Uu-PDCP at the transmitting end. For the remote UE at the receiving end, it is equivalent to that there is a virtual Uu-PDCP entity at the U2N relay. For details, reference may be made to a Uu-PDCP entity in a dashed box of the U2N relay in FIG. 9. For the remote UE, the PC5-PTP RLC entity and the PC5-PTM RLC entity of the remote UE respectively receive the MBS data through the PTP channel of the PC5 and the PTM channel of the PC5, and after receiving the MBS data, send the MBS data to the anchor Uu-PDCP (or PDCP) entity. The Uu-PDCP reorders the MBS data and then sends the MBS data to an upper layer.

It should be noted that a specific method for duplicate packet detection and reordering is described above, and details are not described herein again in this application.

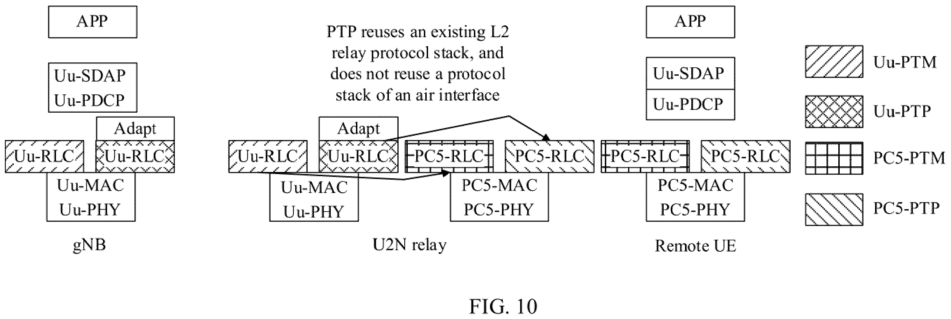

FIG. 10 mainly shows that the U2N relay duplicates the MBS data in the non-multiplexing manner and forwards the MBS data to the remote UE. A difference between the solution 3 (non-multiplexing manner) and the solution 1 and the solution 2 lies in that, in the solution 3, a case in which the U2N relay receives the MBS is not considered. To be specific, that the U2N relay duplicates the received MBS data packet, sends one copy to the application layer of the U2N relay, and continues to deliver the other copy to the remote UE is not considered.

Specifically, for multicast MBS data, the relay UE needs to receive the MBS data, so that the MBS data is forwarded to the remote UE in a multicast manner. For MBS data sent to the remote UE through a unicast channel, the relay UE also needs to receive the MBS data and then forward the MBS data to the remote UE.

In the solution 3, a Uu PDCP entity on the remote UE side corresponds to a Uu PDCP layer on the gNB side. Therefore, the PDCP entity on the remote UE side may further trigger a PDCP status report to the peer end, to implement transmission reliability by using the PDCP layer. In addition, transmission reliability may be ensured by using the HARQ mechanism of the PC5 interface between the U2N relay and the remote UE and the RLC ARQ of the PTP channel.

Embodiments described in this specification may be independent solutions, or may be combined based on internal logic. These solutions all fall within the protection scope of this application.

It may be understood that, in the foregoing method embodiments, the methods and the operations that are implemented by the devices may alternatively be implemented by a component (for example, a chip or a circuit) of a corresponding device.

The foregoing mainly describes the solutions provided in embodiments of this application from a perspective of interactions. It may be understood that, to implement the foregoing functions, each network element such as a transmitting end device or a receiving end device includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitting end device or a receiving end device may be divided based on the foregoing method examples. For example, functional modules may be divided based on functions, or two or more functions may be integrated into one processing module. The foregoing integrated module may be implemented in a form of hardware, or may be implemented in a form of a software functional module. It should be noted that, in embodiments of this application, module division is an example and is merely a logical function division. During actual implementation, another division manner may be used. The following uses an example in which functional modules are divided based on corresponding functions for description.

It should be understood that specific examples in embodiments of this application are merely intended to help a person skilled in the art better understand embodiments of this application, but are not intended to limit the scope of embodiments of this application.

It should be understood that sequence numbers in the foregoing processes do not mean execution sequences in various embodiments of this application. The execution sequences of the processes should be determined based on functions and internal logic of the processes, and should not constitute any limitation on the implementation processes of embodiments of this application.

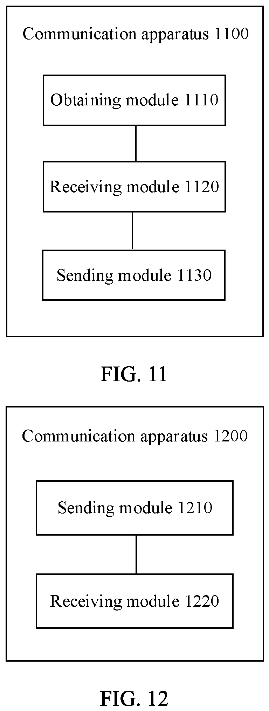

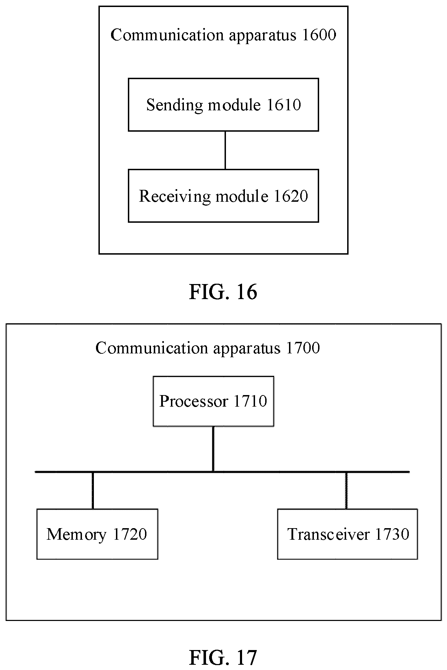

The foregoing has described the method provided in embodiments of this application in detail with reference to FIG. 4 to FIG. 10. The following describes the apparatus provided in embodiments of this application with reference to FIG. 11 and FIG. 17. It should be understood that descriptions of apparatus embodiments correspond to descriptions of method embodiments. Therefore, for content that is not described in detail, reference may be made to the foregoing method embodiments. For brevity, details are not described herein again.

FIG. 11 is a schematic block diagram of a communication apparatus according to an embodiment of this application. As shown in FIG. 11, an apparatus 1100 includes an obtaining module 1110, a receiving module 1120, and a sending module 1130.

In a possible design, the communication apparatus 1100 may correspond to the first terminal device in the methods in FIG.4 and FIG.5 according to embodiments of this application. The communication apparatus 1100 may include modules configured to perform the method performed by the first terminal device in the method in FIG. 4 and the method in FIG. 5. In addition, the modules in the communication apparatus 1100 and the foregoing other operations and/or functions are separately intended to implement corresponding procedures of the method in FIG. 4 and the method in FIG. 5.

When the communication apparatus 1100 is configured to perform the method 400 in FIG. 4, the obtaining module 1110 may be configured to perform S410, S411, and S412 in the method 400, and the receiving module 1120 may be configured to perform S420 in the method 400. When the communication apparatus 1100 is configured to perform the method 500 in FIG. 5, the obtaining module 1110 may be configured to perform S530, S532, and S535 in the method 500, the receiving module 1120 may be configured to perform S536 in the method 500, and the sending module 1130 may be configured to perform S531 in the method 500. It should be understood that a specific process in which the modules perform the foregoing corresponding steps is described in detail in the foregoing method embodiments. For brevity, details are not described herein again.

FIG. 12 is a schematic block diagram of a communication apparatus according to an embodiment of this application. As shown in FIG. 12, the apparatus 1200 includes a sending module 1210 and a receiving module 1220.

In a possible design, the communication apparatus 1200 may correspond to the relay terminal device in the methods 400 and 500 according to embodiments of this application. The communication apparatus 1200 may include modules configured to perform the method performed by the relay terminal device in the method 400 in FIG. 4 and the method 500 in FIG. 5. In addition, the modules in the communication apparatus 1200 and the foregoing other operations and/or functions are separately intended to implement corresponding procedures of the method 400 in FIG. 4 and the method 500 in FIG. 5.

When the communication apparatus 1200 is configured to perform the method 400 in FIG. 4, the sending module 1210 may be configured to perform S411 in the method 400. When the communication apparatus 1200 is configured to perform the method 500 in FIG. 5, the sending module 1210 may be configured to perform S532, S533, and S536 in the method 500, and the receiving module 1220 may be configured to perform S510 and S531 in the method 500. It should be understood that a specific process in which the modules perform the foregoing corresponding steps is described in detail in the foregoing method embodiments. For brevity, details are not described herein again.

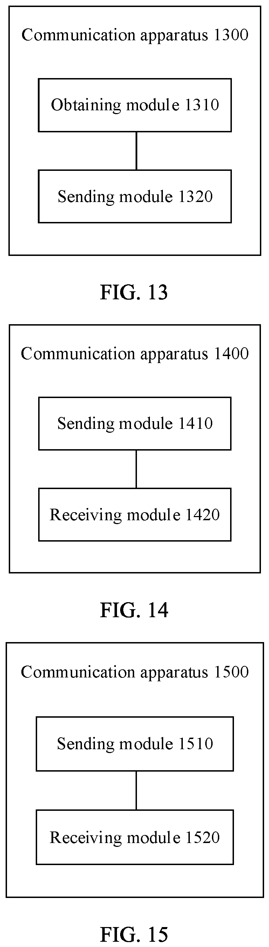

FIG. 13 is a schematic block diagram of a communication apparatus according to an embodiment of this application. As shown in FIG. 13, the apparatus 1300 includes an obtaining module 1310 and a sending module 1320.

In a possible design, the communication apparatus 1300 may correspond to the network device in the methods 400 and 500 according to embodiments of this application. The communication apparatus 1300 may include modules configured to perform the method performed by the network device in the method 400 in FIG. 4 and the method 500 in FIG. 5. In addition, the modules in the communication apparatus 1300 and the foregoing other operations and/or functions are separately intended to implement corresponding procedures of the method 400 in FIG. 4 and the method 500 in FIG. 5.

When the communication apparatus 1300 is configured to perform the method 400 in FIG. 4, the sending module 1320 may be configured to perform S412 in the method 400. When the communication apparatus 1300 is configured to perform the method 500 in FIG. 5, the obtaining module 1310 may be configured to perform S533 in the method 500, and the sending module 1320 may be configured to perform S510 and S535 in the method 500. It should be understood that a specific process in which the modules perform the foregoing corresponding steps is described in detail in the foregoing method embodiments. For brevity, details are not described herein again.

FIG. 14 is a schematic block diagram of a communication apparatus according to an embodiment of this application. As shown in FIG. 14, the apparatus 1400 includes a sending module 1410 and a receiving module 1420.

In a possible design, the communication apparatus 1400 may correspond to the network device in the methods in FIG.6 and FIG.7 according to embodiments of this application. The communication apparatus 1400 may include modules configured to perform the method performed by the network device in the method 600 in FIG. 6 and the method 700 in FIG. 7. In addition, the modules in the communication apparatus 1400 and the foregoing other operations and/or functions are separately intended to implement corresponding procedures of the method 600 in FIG. 6 and the method 700 in FIG. 7.

When the communication apparatus 1400 is configured to perform the method 600 in FIG. 6, the sending module 1410 may be configured to perform S610 or S620 in the method 600. When the communication apparatus 1400 is configured to perform the method 700 in FIG. 7, the sending module 1410 may be configured to perform S740 or S760 and S750 in the method 700, and the receiving module 1420 may be configured to perform S720 in the method 700. It should be understood that a specific process in which the modules perform the foregoing corresponding steps is described in detail in the foregoing method embodiments. For brevity, details are not described herein again.

FIG. 15 is a schematic block diagram of a communication apparatus according to an embodiment of this application. As shown in FIG. 15, the apparatus 1500 includes a sending module 1510 and a receiving module 1520.

In a possible design, the communication apparatus 1500 may correspond to the relay terminal device in the methods in FIG.6 and FIG.7 according to embodiments of this application. The communication apparatus 1500 may include modules configured to perform the method performed by the relay terminal device in the method 600 in FIG. 6 and the method 700 in FIG. 7. In addition, the modules in the communication apparatus 1500 and the foregoing other operations and/or functions are separately intended to implement corresponding procedures of the method 600 in FIG. 6 and the method 700 in FIG. 7.

When the communication apparatus 1500 is configured to perform the method 600 in FIG. 6, the receiving module 1520 may be configured to perform S610 in the method 600. When the communication apparatus 1500 is configured to perform the method 700 in FIG. 7, the sending module 1510 may be configured to perform S750 in the method 700, and the receiving module 1520 may be configured to perform S740 or S760 in the method 700. It should be understood that a specific process in which the modules perform the foregoing corresponding steps is described in detail in the foregoing method embodiments. For brevity, details are not described herein again.

FIG. 16 is a schematic block diagram of a communication apparatus according to an embodiment of this application. As shown in FIG. 16, the apparatus 1600 includes a sending module 1610 and a receiving module 1620.

In a possible design, the communication apparatus 1600 may correspond to the first terminal device in the methods in FIG.6 and FIG.7 according to embodiments of this application. The communication apparatus 1600 may include modules configured to perform the method performed by the first terminal device in the method 600 in FIG. 6 and the method 700 in FIG. 7. In addition, the modules in the communication apparatus 1600 and the foregoing other operations and/or functions are separately intended to implement corresponding procedures of the method 600 in FIG. 6 and the method 700 in FIG. 7.

When the communication apparatus 1600 is configured to perform the method 600 in FIG. 6, the receiving module 1620 may be configured to perform S620 in the method 600. When the communication apparatus 1600 is configured to perform the method 700 in FIG. 7, the sending module 1610 may be configured to perform S710 in the method 700, and the receiving module 1620 may be configured to perform S750 or S760 in the method 700. It should be understood that a specific process in which the modules perform the foregoing corresponding steps is described in detail in the foregoing method embodiments. For brevity, details are not described herein again.

FIG. 17 is a block diagram of a structure of a communication apparatus 1700 according to an embodiment of this application. The communication apparatus 1700 shown in FIG. 17 includes a processor 1710 and may further include a memory 1720 and a transceiver 1730. The processor 1710 is coupled to the memory 1720 and is configured to execute instructions stored in the memory 1720, to control the transceiver 1730 to send a signal and/or receive a signal.

It should be understood that the processor 1710 and the memory 1720 may be integrated into a processing apparatus. The processor 1710 is configured to execute program code stored in the memory 1720, to implement the foregoing functions. During specific implementation, the memory 1720 may alternatively be integrated into the processor 1710, or may be independent of the processor 1710. It should be understood that the transceiver 1730 may correspond to each receiving module and each sending module in the foregoing communication apparatus.

It should be further understood that the transceiver 1730 may include a receiver (or referred to as a receiving machine) and a transmitter (or referred to as a transmitting machine). The transceiver may further include an antenna. There may be one or more antennas. Alternatively, the transceiver may be a communication interface or an interface circuit.

Specifically, the communication apparatus 1700 may correspond to the first terminal device in the methods 400, 500, 600, and 700, the relay terminal device in the methods 400, 500, 600, and 700, or the network device in the methods 400, 500, 600, and 700 according to embodiments of this application. The communication apparatus 1700 may include a module for performing the method performed by the first terminal device in the methods 400, 500, 600, and 700, a module for performing the method performed by the relay terminal device in the methods 400, 500, 600, and 700, or a module for performing the method performed by the network device in the methods 400, 500, 600, and 700. It should be understood that a specific process in which the modules perform the foregoing corresponding steps is described in detail in the foregoing method embodiments. For brevity, details are not described herein again.

When the communication apparatus 1700 is a chip, the chip includes a transceiver unit and a processing unit. The transceiver unit may be an input/output circuit or a communication interface. The processing unit may be a processor, a microprocessor, or an integrated circuit that is integrated on the chip.

In an implementation process, the steps in the foregoing methods may be completed by using an integrated logic circuit of hardware in the processor, or by using instructions in a form of software. The steps of the methods disclosed with reference to embodiments of this application may be directly executed and completed by a hardware processor, or may be executed and completed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be noted that the processor in embodiments of this application may be an integrated circuit chip and has a signal processing capability. In an implementation process, the steps in the foregoing method embodiments may be completed by using an integrated logic circuit of hardware in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

According to the method provided in embodiments of this application, this application further provides a computer program product. The computer program product includes computer program code. When the computer program code is run on a computer, the computer is enabled to perform the method in any one of the embodiments shown in FIG. 4 to FIG. 10.

According to the method provided in embodiments of this application, this application further provides a computer-readable medium. The computer-readable medium stores program code. When the program code is run on a computer, the computer is enabled to perform the method in any one of the embodiments shown in FIG. 4 to FIG. 10.

According to the method provided in embodiments of this application, this application further provides a system. The system includes the foregoing apparatus or device.

Terms such as "component", "module", and "system" used in this specification indicate computer-related entities, hardware, firmware, combinations of hardware and software, software, or software being executed. For example, a component may be but is not limited to a process that is run on a processor, a processor, an object, an executable file, a thread of execution, a program, and/or a computer. As illustrated by using figures, both a computing device and an application that are run on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should be understood that division of modules in the apparatus is merely logical function division. During actual implementation, all or some of the modules may be integrated into one physical entity or may be physically separated. In addition, all the modules in the apparatus may be implemented in a form of software invoked by a processing element, or may be implemented in a form of hardware; or some modules may be implemented in a form of software invoked by a processing element, and some modules may be implemented in a form of hardware. For example, each module may be a separately disposed processing element, or may be integrated into a chip of the apparatus for implementation. In addition, each module may alternatively be stored in the memory in a form of a program to be invoked by a processing element of the apparatus to perform a function of the module. The processing element herein may also be referred to as a processor, and may be an integrated circuit having a signal processing capability. In an implementation process, the steps of the foregoing methods or the foregoing modules may be implemented by using a hardware integrated logic circuit in the processor element, or may be implemented in a form of software invoked by the processing element.

Optionally, the computer instructions are stored in a storage unit.

Optionally, the storage unit is a storage unit in the chip, for example, a register or a cache; or the storage unit may be a storage unit in the terminal but outside the chip, for example, a read-only memory (Read-Only Memory, ROM), another type of static storage device capable of storing static information and instructions, or a random access memory (Random Access Memory, RAM). Any one of the processors mentioned above may be a central processing unit (central processing unit, CPU), a microprocessor, an application-specific integrated circuit (application specific integrated circuit, ASIC), or one or more integrated circuits configured to control program execution in the foregoing transmission method for information feedback. The processing unit and the storage unit may be decoupled, are separately disposed on different physical devices, and are connected in a wired or wireless manner to implement functions of the processing unit and the storage unit, to support a system chip in implementing various functions in the foregoing embodiments. Alternatively, the processing unit and the memory may be coupled to a same device.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), and a direct Rambus random access memory (direct rambus RAM, DR RAM).

A person of ordinary skill in the art may be aware that modules and algorithm steps of the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, the division of units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. Indirect couplings or communication connections between apparatuses or units may be implemented in electrical, mechanical, or other forms.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as a separate product, the functions may be stored in a computer-readable storage medium. Based on such an understanding, the technical solutions of this application essentially or parts contributing to the conventional technology or some of the technical solutions may be embodied in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first terminal device, first information, wherein the first information comprises a first multicast and broadcast service MBS service identifier and first sidelink SL resource information, a mapping relationship exists between the first MBS service identifier and the first SL resource information, a first MBS is an MBS supported by a first relay terminal device, and the first SL resource information is used for transmitting data of the first MBS to the first terminal device; and
receiving, by the first terminal device based on the first SL resource information, the data that is of the first MBS and that is sent by the first relay terminal device.

2. The method according to claim 1, wherein
the first information further comprises a second MBS service identifier and second SL resource information, a mapping relationship exists between the second MBS service identifier and the second SL resource information, a second MBS is an MBS supported by a second relay terminal device, and the second SL resource information is used for transmitting data of the second MBS to the first terminal device; and
the method comprises:
receiving, by the first terminal device based on the second SL resource information, the data that is of the second MBS and that is sent by the second relay terminal device, wherein
the second relay terminal device is different from the second relay terminal device.

3. The method according to claim 2, wherein
the obtaining, by a first terminal device, first information comprises:
receiving, by the first terminal device, the first information sent by the first relay terminal device or the second relay terminal device.

4. The method according to claim 2, wherein
the obtaining, by a first terminal device, first information comprises:
receiving, by the first terminal device, the first information sent by a network device, wherein the first information further comprises identification information of the first relay terminal device, and the identification information of the first relay terminal device corresponds to the first MBS service identifier and the first SL resource information.

5. The method according to claim 4, wherein
the first information further comprises identification information of the second relay terminal device, and the identification information of the second relay terminal device corresponds to the second MBS service identifier and the second SL resource information.

6. The method according to any one of claims 1 to 5, wherein
the first SL resource information or the second SL resource information comprises a group layer-2 identity G-L2ID and/or resource pool information RP info.

7. The method according to any one of claims 1 to 6, further comprising:
sending, by the first terminal device, second information, wherein the second information is used for requesting to send the first information.

8. A communication method, comprising:
sending, by a first relay terminal device, first information, wherein the first information comprises a mapping relationship between a first MBS service identifier and first sidelink SL resource information, a first MBS is an MBS supported by the first relay terminal device, and the first SL resource information is used for transmitting data of the first MBS to a first terminal device; and
sending, by the first relay terminal device based on the first SL resource information, the data of the first MBS to the first terminal device.

9. The method according to claim 8, wherein the method further comprises:
sending, by a second relay terminal device, the first information, wherein the first information further comprises a second MBS service identifier and second SL resource information, a mapping relationship exists between the second MBS service identifier and the second SL resource information, a second MBS is an MBS supported by the second relay terminal device, and the second SL resource information is used for transmitting data of the second MBS to the first terminal device; and
the method comprises:
sending, by the second relay terminal device based on the second SL resource information, the data of the second MBS to the first terminal device, wherein
the second relay terminal device is different from the second relay terminal device.

10. The method according to claim 9, wherein the first SL resource information or the second SL resource information comprises a group layer-2 identity G-L2ID and/or resource pool information RP info.

11. The method according to claim 9 or 10, wherein the method further comprises:
receiving, by the first relay terminal device or the second relay terminal device, second information, wherein the second information is used for requesting to send the first information.

12. A communication method, comprising:
obtaining, by a network device, first information, wherein the first information comprises identification information of a first relay terminal device, a first multicast and broadcast service MBS service identifier, and first sidelink SL resource information; and
sending, by the network device, the first information to the first terminal device, wherein
the identification information of the first relay terminal device corresponds to the first MBS service identifier and the first SL resource information, a first MBS is an MBS supported by the first relay terminal device, and the first SL resource information is used for transmitting data of the first MBS to the first terminal device.

13. The method according to claim 12, wherein
the first information further comprises identification information of a second relay terminal device, a second MBS service identifier, and second SL resource information; and
the identification information of the second relay terminal device corresponds to the second MBS service identifier and the second SL resource information, the second relay terminal device is different from the second relay terminal device, a second MBS is an MBS supported by the second relay terminal device, and the second SL resource information is used for transmitting data of the second MBS to the first terminal device.

14. The method according to claim 13, wherein the first SL resource information or the second SL resource information comprises a group layer-2 identity G-L2ID and/or resource pool information RP info.

15. A communication method, comprising:
sending, by a network device, third information, wherein the third information comprises a first multicast and broadcast service MBS service identifier and a first sidelink SL identifier, a mapping relationship exists between the first MBS service identifier and the first SL identifier, a first MBS is an MBS supported by a relay terminal device, and a first SL is a communication link used for transmitting the first MBS between the relay terminal device and a first terminal device.

16. The method according to claim 15, wherein the first SL identifier comprises at least one of the following:
a sidelink radio bearer SLRB identifier;
a sidelink logical channel identifier LCID; and
a group layer-2 identity G-L2ID.

17. The method according to claim 15 or 16, wherein
the third information further comprises first transmission information, a mapping relationship exists between the first transmission information and the first SL identifier, the first transmission information comprises point-to-point PTP transmission information and/or point-to-multipoint PTM transmission information, and the first transmission information is used for transmitting data of the first MBS.

18. The method according to any one of claims 15 to 17, wherein
the third information further comprises first indication information, and the first indication information indicates that a Radio Link Control Protocol RLC duplication manner is used for duplicating the data of the first MBS; or
the first indication information indicates that a Packet Data Convergence Protocol PDCP duplication manner is used for duplicating the data of the first MBS.

19. The method according to any one of claims 15 to 18, wherein the third information further comprises identification information of the first terminal device; and
the sending, by a network device, third information comprises:
sending, by the network device, the identification information of the first terminal device to the relay terminal device.

20. A communication method, comprising:
receiving, by a relay terminal device, third information, wherein the third information comprises a first multicast and broadcast service MBS service identifier and a first sidelink SL identifier, a mapping relationship exists between the first MBS service identifier and the first SL identifier, a first MBS is an MBS supported by the relay terminal device, and a first SL is a communication link used for transmitting the first MBS between the relay terminal device and a first terminal device.

21. The method according to claim 20, wherein the first SL identifier comprises at least one of the following:
a sidelink radio bearer SLRB identifier;
a sidelink logical channel identifier LCID; and
a group layer-2 identity G-L2ID.

22. The method according to claim 21, wherein
the third information further comprises first transmission information, a mapping relationship exists between the first transmission information and the first SL identifier, the first transmission information comprises point-to-point PTP transmission information and/or point-to-multipoint PTM transmission information, and the first transmission information is used for transmitting data of the first MBS.

23. The method according to any one of claims 20 to 22, wherein
the third information further comprises first indication information, and the first indication information indicates that a Radio Link Control Protocol RLC duplication manner is used for duplicating the data of the first MBS; or
the first indication information indicates that a Packet Data Convergence Protocol PDCP duplication manner is used for duplicating the data of the first MBS.

24. The method according to any one of claims 20 to 23, wherein the third information further comprises identification information of the first terminal device; and
the receiving, by a relay terminal device, third information comprises:
receiving, by the relay terminal device, the identification information that is of the first terminal device and that is sent by a network device.

25. A communication method, comprising:
receiving, by a first terminal device, third information, wherein the third information comprises a first multicast and broadcast service MBS service identifier and a first sidelink SL identifier, a mapping relationship exists between the first MBS service identifier and the first SL identifier, a first MBS is an MBS supported by a relay terminal device, and a first SL is a communication link used for transmitting the first MBS between the relay terminal device and the first terminal device.

26. The method according to claim 25, wherein the first SL identifier comprises at least one of the following:
a sidelink radio bearer SLRB identifier;
a sidelink logical channel identifier LCID; and
a group layer-2 identity G-L2ID.

27. The method according to claim 25 or 26, wherein
the third information further comprises first transmission information, a mapping relationship exists between the first transmission information and the first SL identifier, the first transmission information comprises point-to-point PTP transmission information and/or point-to-multipoint PTM transmission information, and the first transmission information is used for transmitting data of the first MBS.

28. The method according to any one of claims 25 to 27, wherein
the third information further comprises first indication information, and the first indication information indicates that a Radio Link Control Protocol RLC duplication manner is used for duplicating the data of the first MBS; or
the first indication information indicates that a Packet Data Convergence Protocol PDCP duplication manner is used for duplicating the data of the first MBS.

29. A communication apparatus, comprising:
a memory, configured to store computer instructions; and
a processor, configured to execute the computer instructions stored in the memory, to enable the apparatus to perform the method according to any one of claims 1 to 7, or the method according to any one of claims 8 to 11, or the method according to any one of claims 12 to 14, or the method according to any one of claims 15 to 19, or the method according to any one of claims 20 to 24, or the method according to any one of claims 25 to 28.

30. A computer-readable storage medium, wherein the computer-readable storage medium stores a computer program, and the computer program is configured to perform the method according to any one of claims 1 to 7, or the method according to any one of claims 8 to 11, or the method according to any one of claims 12 to 14, or the method according to any one of claims 15 to 19, or the method according to any one of claims 20 to 24, or the method according to any one of claims 25 to 28.

31. A chip system, comprising: a processor, wherein the processor is configured to execute a stored computer program, and the computer program is configured to perform the method according to any one of claims 1 to 7, or the method according to any one of claims 8 to 11, or the method according to any one of claims 12 to 14, or the method according to any one of claims 15 to 19, or the method according to any one of claims 20 to 24, or the method according to any one of claims 25 to 28.
